# EUROPEAN PATENT APPLICATION

(11) **EP 4 832 596 A1**
(43) Date of publication of application: **28.10.2026**
(21) Application number: 25741356.7
(22) Date of filing: 03.01.2025
(51) Int. Cl.: H04W 52/02

(54) **COMMUNICATION METHOD, SYSTEM, AND RELATED DEVICE**

(30) Priority: 18.01.2024 CN 202410075292
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Gill Jennings & Every LLP
(86) International application number: PCT/CN2025/070365
(87) International publication number: WO 2025/152793

(57) **Abstract**

Embodiments of this application provide a communication method and system, and a related device. The communication method includes: A UE obtains a DRS. The DRS is used for synchronizing with a network element. The UE sends a wake-up signal. The wake-up signal is used for waking up the network element to send at least one of an SSB and a SIB1. Then the UE obtains at least one of the SSB and the SIB 1, and accesses the network element based on the at least one of the SSB and the SIB1 that are obtained. Before obtaining the wake-up signal, the UE can achieve synchronization with the network element by obtaining the DRS sent by the network element. Therefore, the network element does not need to send either the SSB or the SIB1. Information carried in the DRS is usually less than information carried in the SSB/SIB 1, so that the network element can save energy consumption generated by sending the SIB1, to achieve energy saving.

## Description

This application claims priority to Chinese Patent Application No. 202410075292.9, filed with China National Intellectual Property Administration on January 18, 2024, and entitled "COMMUNICATION METHOD AND SYSTEM AND RELATED DEVICE", which is incorporated herein by reference in its entirety.

### TECHNICAL FIELD

This application relates to the field of communication technologies, and in particular, to a communication method and system and a related device.

### BACKGROUND

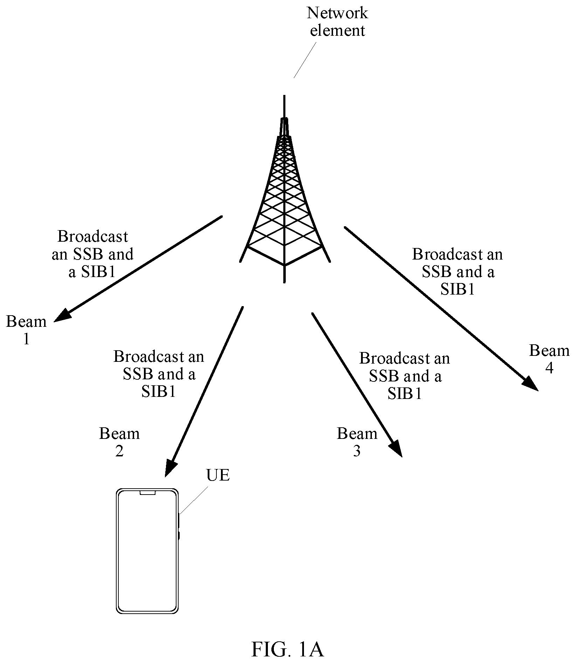

Currently, as shown in FIG. 1A, a network element (for example, a base station) periodically sends a synchronization signal/physical broadcast channel block (synchronization signal/physical broadcast channel block, SSB) and a system information block 1 (system information block1, SIB1) on a plurality of beams (beams), so that a user equipment (user equipment, UE) within signal coverage of the network element can synchronize with the network element in time domain and access the network element based on the received SSB and SIB1.

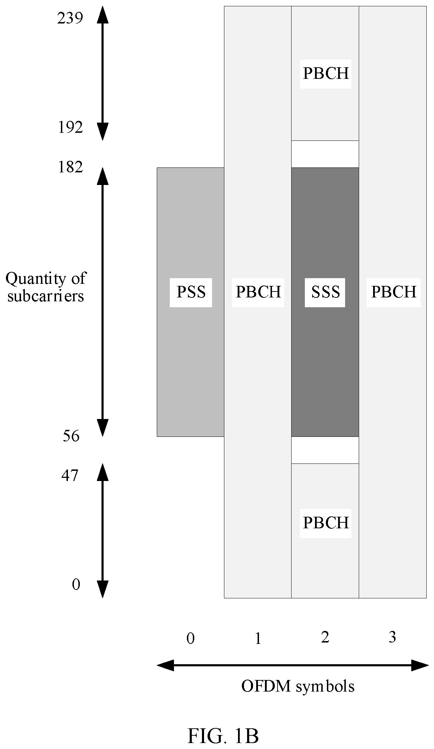

As shown in FIG. 1B, the SSB includes a primary synchronization signal (primary synchronization signal, PSS), a secondary synchronization signal (secondary synchronization signal, SSS), and a physical broadcast channel (physical broadcast channel, PBCH). As shown in FIG. 1B, the SSB occupies four orthogonal frequency division multiplexing symbols (orthogonal frequency division multiplexing, OFDM) in time domain, and occupies 240 subcarriers in a frequency domain. The UE may synchronize with the network element in time domain by using the PSS and the SSS, and may decode, by using system information carried on the PBCH, such as a master information block (master information block, MIB), the SIB1 broadcast by the network element, to obtain basic configuration information required for accessing the network element, so that after synchronizing with the network element, the UE accesses the network element by using the basic configuration information obtained through decoding.

Typically, the network element separately broadcasts the SSB and the SIB1 on a plurality of beams, so that the network element is continuously in a state of broadcasting signals with high power consumption, causing energy consumption of the network element to be maintained at a high level for a long time.

### SUMMARY

This application provides a communication method and system and a related device, to reduce energy consumption of a network element and achieve network energy saving.

To achieve the foregoing objectives, this application provides the following technical solutions.

According to a first aspect, this application provides a communication method. The method is applied to a UE. The method includes: The UE obtains a DRS (a discovery reference signal), for example, receives a DRS broadcast by a network element. The DRS is used for synchronizing with the network element, and may specifically perform downlink synchronization with the network element. The UE sends a wake-up signal (WUS), for example, sends a wake-up signal to the network element. The wake-up signal is used for waking up the network element to send at least one of an SSB (a synchronization signal/physical broadcast channel block) and a SIB (a system information block) 1. Then, the UE obtains at least one of the SSB and the SIB1, for example, obtains the SSB and/or the SIB1 broadcast by the network element, and accesses the network element based on the at least one of the obtained SSB and SIB1. The network element may broadcast the SSB and the SIB1 after receiving the WUS. Alternatively, the network element may broadcast only the SSB, so that the UE may access the network element based on the locally stored SIB1 and the SSB broadcast by the network element. Alternatively, the network element may broadcast only the SIB1, so that the UE may access the network element based on the locally stored SSB and the SIB1 broadcast by the network element.

Before obtaining the wake-up signal, the UE can achieve synchronization with the network element by obtaining the DRS sent by the network element. Therefore, the network element does not need to send either the SSB or the SIB1, so that the network element can save energy consumption generated by sending the SIB1, to achieve energy saving. Further, in an actual application scenario, information carried in the DRS sent by the network element usually may be less than information carried in the SSB, for example, the DRS may occupy only two OFDM symbols in time domain. In this way, energy consumption generated by the network element sending the DRS before obtaining the wake-up signal is less than energy consumption generated by sending the SSB, so that the network element can further achieve energy saving.

In a possible implementation, the UE may send the wake-up signal based on a first time-frequency resource. Therefore, the UE may further determine an identifier of the first time-frequency resource based on the DRS broadcast by the network element. In this way, the UE enables the network element to send the wake-up signal based on the first time-frequency resource indicated by a network element 1 through the DRS, to wake up the network element to broadcast the SSB and/or the SIB1.

In a possible implementation, the DRS broadcast by the network element further includes at least one RE (resource element). Therefore, when the UE determines the identifier of the first time-frequency resource based on the DRS, specifically, the UE may parse the at least one RE in the DRS to obtain the identifier of the first time-frequency resource. In this way, the network element may carry the identifier of the first time-frequency resource by using the RE in the DRS, to configure a time-frequency resource used when the UE sends the wake-up signal, thereby facilitating successful triggering of the network element to broadcast the SSB and/or the SIB1.

In a possible implementation, when the UE determines the identifier of the first time-frequency resource based on the DRS, specifically, the UE may parse a coding sequence of the DRS to obtain the identifier of the first time-frequency resource. The identifier of the first time-frequency resource serves as a generation parameter of the coding sequence of the DRS. In this way, the network element may use the identifier of the first time-frequency resource as a generation parameter of the coding sequence of the DRS, so as to configure, by using the DRS, a time-frequency resource used when the UE sends the wake-up signal, thereby implementing successful triggering of the network element to broadcast the SSB and/or the SIB1.

In a possible implementation, the UE may specifically obtain at least one DRS within a signal broadcast period when obtaining the DRS. Therefore, when determining the identifier of the first time-frequency resource based on the DRS, the UE may specifically determine the identifier of the first time-frequency resource based on a time distribution of the at least one DRS within the signal broadcast period. In this way, the network element may configure, based on a broadcast condition of the DRS within a signal broadcast period, a time-frequency resource used when the UE sends the wake-up signal, thereby facilitating successful triggering of the network element to broadcast the SSB and/or the SIB1.

In a possible implementation, the UE may send the wake-up signal based on the first time-frequency resource. Therefore, the UE may further randomly select one type of time-frequency resource from a plurality of predefined types of time-frequency resources as the first time-frequency resource. In this way, the UE enables the network element to send the wake-up signal by randomly selecting one type of time-frequency resource as the first time-frequency resource, so as to wake up the network element to broadcast the SSB and/or the SIB1.

In a possible implementation, the UE may send the wake-up signal based on the first time-frequency resource. Therefore, the UE may further determine at least one type of time-frequency resource associated with the UE, and determine the first time-frequency resource from the at least one type of time-frequency resource. In this way, the UE enables the network element to send the wake-up signal by randomly selecting one type of time-frequency resource as the first time-frequency resource, so as to wake up the network element to broadcast the SSB and/or the SIB1. In the meantime, the network element may determine related information of the UE based on the first time-frequency resource used for transmitting the wake-up signal, for example, determine a group to which the UE belongs (time-frequency resources that can be used by UEs in each group for sending the wake-up signal are one or more fixed time-frequency resources).

In a possible implementation, the UE may send the wake-up signal based on the first time-frequency resource. Therefore, the UE may further obtain group-common DCI (group-common downlink control information) sent by the network element, so that the UE may parse the identifier of the first time-frequency resource from the group-common DCI, so as to send the wake-up signal based on a first video resource indicated by the network element. During actual application, the group-common DCI may include identifiers of time-frequency resources that can be used by a plurality of UEs for sending the wake-up signal to the network element, so that each of the UEs receiving the group-common DCI may parse therefrom an identifier of time-frequency resource required by the UE.

In a possible implementation, the DRS includes a PSS (a primary synchronization signal) and an SSS (a secondary synchronization signal). In this way, energy consumption generated by the network element in broadcasting the DRS is less than energy consumption generated in broadcasting the SSB, so that the network element can achieve energy saving.

In a possible implementation, when obtaining the DRS, the UE may specifically obtain a plurality of DRSs. Each of the plurality of DRSs corresponds to one beam, and different DRSs correspond to different beams. Therefore, when sending the wake-up signal, the UE may determine a first beam, and send the wake-up signal on the first beam (send the wake-up signal by using a resource associated with the first beam), where one of the plurality of DRSs located on the first beam has highest signal quality. In this way, the network element may broadcast the SSB and/or the SIB1 only on the first beam, and may not broadcast a signal on another beam, thereby further achieving energy saving of the network element.

In a possible implementation, a coding sequence of the wake-up signal is a preset coding sequence, for example, may be a low peak-to-average ratio code, or may be a pseudo-random code. Alternatively, the UE may specifically send the wake-up signal on a RACH (a random access channel) when sending the wake-up signal. In this way, when detecting a specific coding sequence or detecting a signal on a specific channel, the network element may determine that a wake-up signal is sent by a UE, so as to trigger the network element to send the SSB and/or the SIB1.

In a possible implementation, the DRS occupies two OFDMs (orthogonal frequency division multiplexing symbols) in time domain, the PSS in the DRS occupies the first of the OFDMs, and the SSS in the DRS occupies the second of the OFDMs. Alternatively, the DRS occupies four OFDMs in time domain, the PSS in the DRS occupies the first of the OFDMs, and the SSS in the DRS occupies the third of the OFDMs.

In a possible implementation, the DRS sent by the network element is specifically an LP-SS (a low-power synchronization signal). Therefore, after receiving the LP-SS, the UE not only may achieve downlink synchronization based on the LP-SS, but also may measure signal quality of the LP-SS. When the signal quality of the received LP-SS is lower than a threshold, the UE may send a wake-up signal to the network element. In this case, the wake-up signal sent by the UE to the network element is used for waking up the network element to send the SSB. The SIB1 may be sent together with the SSB, or may not be sent together with the SSB. In this way, when the signal quality of the received LP-SS is relatively low, the UE may measure signal receiving quality of the UE under signal coverage of the network element by requesting the network element to broadcast the SSB, so that when the signal receiving quality (that is, signal quality of the received SSB) is relatively low, the network element accessed by the UE may be switched.

According to a second aspect, this application provides a communication method. The communication method is applied to a network element, and the network element may be, for example, a base station. Specifically, the network element sends a DRS (a discovery reference signal), for example, periodically broadcasts the DRS. The DRS is used for providing synchronization for a UE, and may be specifically used for providing downlink synchronization. Then, the network element obtains a wake-up signal, for example, receives a wake-up signal sent by the UE. The wake-up signal is used for waking up the network element to send at least one of an SSB (a synchronization signal/physical broadcast channel block) and a SIB (a system information block) 1, so that the network element sends at least one of the SSB and the SIB1 based on the wake-up signal. The SSB and the SIB1 are used by the UE to access the network element.

In a possible implementation, the wake-up signal is transmitted based on a first time-frequency resource, the DRS further includes at least one RE (a resource element), and the at least one RE indicates the first time-frequency resource.

In a possible implementation, the wake-up signal is transmitted based on a first time-frequency resource, and a generation parameter of a coding sequence of the DRS includes an identifier of the first time-frequency resource.

In a possible implementation, the wake-up signal is transmitted based on a first time-frequency resource, and the sending a discovery reference signal DRS includes: sending at least one DRS within a signal broadcast period. A time distribution of the at least one DRS within the signal broadcast period indicates the first time-frequency resource.

In a possible implementation, the wake-up signal is transmitted based on a first time-frequency resource, and the method further includes: sending group-common downlink control information (group common DCI). The group-common DCI carries an identifier of the first time-frequency resource.

In a possible implementation, the DRS includes a PSS (a primary synchronization signal) and an SSS (a secondary synchronization signal).

In a possible implementation, the network element sending a DRS includes: sending a plurality of DRSs. Each of the plurality of DRSs corresponds to one beam, and different DRSs correspond to different beams. The network element obtaining a wake-up signal includes: obtaining the wake-up signal on a first beam, where one of the plurality of DRSs transmitted to the UE located on the first beam has highest signal quality.

In a possible implementation, energy of the wake-up signal is greater than a threshold, or a coding sequence of the wake-up signal is a preset coding sequence, or the network element obtaining a wake-up signal specifically refers to detecting, within a resource window, the wake-up signal located on a RACH (a random access channel).

In a possible implementation, the DRS occupies two OFDMs (orthogonal frequency division multiplexing symbols) in time domain, the PSS occupies the first of the OFDMs, and the SSS occupies the second of the OFDMs. Alternatively, the DRS occupies four OFDMs in time domain, the PSS occupies the first of the OFDMs, and the SSS occupies the third of the OFDMs.

In a possible implementation, the DRS includes an LP-SS (a low-power synchronization signal), and the wake-up signal is used for waking up the network element to send the SSB.

The communication method provided in the second aspect corresponds to the communication method provided in the first aspect. Therefore, for the technical effects of any one of the implementations in the second aspect, refer to the technical effects of the corresponding implementation in the first aspect. Details are not described herein.

According to a third aspect, this application provides a communication method. The communication method is applied to a UE (a user equipment). Specifically, the UE obtains an SSB (a synchronization signal/physical broadcast channel block). The UE sends a wake-up signal. The wake-up signal is used for waking up a network element to send a SIB (a system information block) 1. Then, the UE may obtain the SIB1, and access the network element based on the SIB1. In this way, before the network element obtains the WUS, the UE may achieve downlink synchronization by obtaining the SSB sent by the network element. In this way, the network element not to need to send the SIB1, so that the network element can save energy consumption generated by sending the SIB, to achieve energy saving. Further, when the UE needs to access the network element, the UE may wake up the network element to broadcast the SIB1 by sending the wake-up signal, so that the UE may access the network element based on the SSB and the SIB1.

In a possible implementation, a coding sequence of the wake-up signal is a preset coding sequence. Alternatively, the sending a wake-up signal includes: sending the wake-up signal on a random access channel RACH.

In a possible implementation, the wake-up signal is sent based on a first time-frequency resource, and the method further includes: parsing at least one resource element RE in the SSB to obtain an identifier of the first time-frequency resource.

In a possible implementation, the wake-up signal is sent based on a first time-frequency resource, and the method further includes: obtaining group-common downlink control information DCI; and parsing an identifier of the first time-frequency resource from the group-common DCI.

In a possible implementation, the wake-up signal is sent based on a first time-frequency resource, and the method further includes: randomly selecting one type of time-frequency resource from a plurality of predefined types of time-frequency resources as the first time-frequency resource.

In a possible implementation, the wake-up signal is sent based on a first time-frequency resource, and the method further includes: determining at least one type of time-frequency resource associated with the UE; and determining the first time-frequency resource from the at least one type of time-frequency resource.

According to a fourth aspect, this application provides a communication method. The communication method is applied to a network element. Specifically, the network element sends an SSB (a synchronization signal/physical broadcast channel block). Then, the network element obtains a wake-up signal. The wake-up signal is used for waking up the network element to send a SIB (a system information block) 1, so that the network element may send the SIB1 based on the wake-up signal. The SIB1 is used by a UE to access the network element. In this way, before the network element obtains the WUS, the UE may achieve downlink synchronization by obtaining the SSB sent by the network element. In this way, the network element not to need to send the SIB1, so that the network element can save energy consumption generated by sending the SIB, to achieve energy saving. Further, when the UE needs to access the network element, the UE may wake up the network element to broadcast the SIB1 by sending the wake-up signal, so that the UE may access the network element based on the SSB and the SIB1.

In a possible implementation, energy of the wake-up signal is greater than a threshold, or a coding sequence of the wake-up signal is a preset coding sequence, or the obtaining a wake-up signal includes: detecting, within a resource window, the wake-up signal located on a random access channel RACH.

In a possible implementation, the wake-up signal is transmitted based on a first time-frequency resource, and the method further includes: sending group-common downlink control information DCI. The group-common DCI carries an identifier of the first time-frequency resource.

In a possible implementation, the wake-up signal is sent based on a first time-frequency resource, and at least one resource element RE in the SSB indicates an identifier of the first time-frequency resource.

According to a fifth aspect, this application provides a communication method. The communication method is applied to a UE (a user equipment). The method includes: The UE obtains an LP-SS (a low-power synchronization signal). The LP-SS is used for synchronizing with a network element, and specifically may be used for performing downlink synchronization with the network element. Then, the UE sends a wake-up signal when signal quality of the LP-SS is lower than a threshold. The wake-up signal is used for waking up the network element to send an SSB (a synchronization signal/physical broadcast channel block SSB). Then, the UE obtains the SSB. In this way, when the signal quality of the LP-SS received by the UE is relatively low, the UE may request the network element to send the SSB by sending a wake-up signal to the network element. In this way, the UE may determine whether to subsequently access the network element based on the signal quality of the SSB received by the network element. For example, when the signal quality of the SSB received by the UE is relatively low, the UE may subsequently switch a network element to be accessed, for example, may access a network element having higher signal quality of the received SSB, so as to improve communication quality between the UE and the network element after the UE accesses the network element.

In a possible implementation, the method further includes: The UE obtains the SIB1. The UE accesses the network element based on the SSB and the SIB1.

In a possible implementation, when the UE accesses the network element, and specifically, when the signal quality of the SSB is greater than the threshold, the UE accesses the network element based on the SSB and the SIB1.

In a possible implementation, the method further includes: The UE switches a network element to be accessed when the signal quality of the SSB is lower than the threshold.

According to a sixth aspect, this application provides a communication method. The communication method is applied to a network element. The method includes: The network element sends an LP-SS. The LP-SS is used for providing synchronization for a UE (a user equipment), and specifically may be used for providing downlink synchronization; the network element obtains a wake-up signal. The wake-up signal is used for waking up the network element to send an SSB (a synchronization signal/physical broadcast channel block). Then, the network element sends the SSB based on the wake-up signal.

In a possible implementation, the method further includes: The network element sends a SIB1. The SSB and the SIB1 are used by the UE to access the network element.

According to a seventh aspect, this application provides a UE (a user equipment) including a transceiver and a processor. The transceiver is configured to perform a receiving operation and a sending operation in the method according to the foregoing first aspect or any one of the implementations of the first aspect, or perform a receiving operation and a sending operation in the method according to the foregoing third aspect or any one of the implementations of the third aspect, or perform a receiving operation and a sending operation in the method according to the foregoing fifth aspect. The processor is configured to perform other operations than the receiving operation and the sending operation in the method according to the foregoing first aspect or any one of the implementations of the first aspect, or perform another operation other than the receiving operation and the sending operation in the method according to the foregoing third aspect or any one of the implementations of the third aspect, or perform another operation other than the receiving operation and the sending operation in the method according to the foregoing fifth aspect.

According to an eighth aspect, this application provides a network element including a transceiver and a processor. The transceiver is configured to perform a receiving operation and a sending operation in the method according to the foregoing second aspect or any one of the implementations of the second aspect, or perform a receiving operation and a sending operation in the method according to the foregoing fourth aspect or any one of the implementations of the fourth aspect, or perform a receiving operation and a sending operation in the method according to the foregoing sixth aspect. The processor is configured to perform another operation other than the receiving operation and the sending operation in the method according to the foregoing second aspect or any one of the implementations of the second aspect, or perform another operation other than the receiving operation and the sending operation in the method according to the foregoing fourth aspect or any one of the implementations of the fourth aspect, or perform another operation other than the receiving operation and the sending operation in the method according to the foregoing sixth aspect.

According to a ninth aspect, this application provides a communication system including a UE (user equipment) and a network element. The UE is configured to perform the method according to the foregoing first aspect or any one of the implementations of the first aspect, or perform the method according to the foregoing third aspect or any one of the implementations of the third aspect, or perform the method according to the foregoing fifth aspect. The network element is configured to perform the method according to the foregoing second aspect or any one of the implementations of the second aspect, or perform the method according to the foregoing fourth aspect or any one of the implementations of the fourth aspect, or perform the method according to the foregoing sixth aspect.

According to a tenth aspect, this application provides a computer storage medium, configured to store a computer program. The computer program, when executed, is used for implementing the communication method provided in any one of the first aspect to the sixth aspect of this application.

According to an eleventh aspect, this application provides a computer program product including instructions. The instructions, when run on at least one computing device, cause the at least one computing device to implement the communication method provided in any one of the first aspect to the sixth aspect of this application.

### BRIEF DESCRIPTION OF DRAWINGS

FIG. 1A is a schematic structural diagram of a communication system;
FIG. 1B is a schematic structural diagram of an SSB;
FIG. 2A is a schematic diagram of a configuration field of a time-frequency domain resource used when a UE requests SI from a network element;
FIG. 2B is a schematic diagram of periodically broadcasting an SSB and a SIB1 on a plurality of beams according to an embodiment of this application;
FIG. 2C is a diagram of a structure of an example communication system according to an embodiment of this application;
FIG. 2D is a schematic diagram of adjusting a broadcast signal to an SSB and a SIB1 by a network element 1 after receiving a WUS;
FIG. 2E is a schematic diagram of adjusting a broadcast signal to an SSB by a network element 1 after receiving a WUS;
FIG. 2F is a schematic diagram of adjusting a broadcast signal to a SIB1 by a network element 1 after receiving a WUS;
FIG. 2G is a schematic diagram of broadcasting a SIB1 by a network element 1 after receiving a WUS;
FIG. 3 is a schematic flowchart of a communication method according to an embodiment of this application;
FIG. 4A is a schematic structural diagram of an example DRS according to an embodiment of this application;
FIG. 4B is a schematic structural diagram of another example DRS according to an embodiment of this application;
FIG. 4C is a schematic structural diagram of still another example DRS according to an embodiment of this application;
FIG. 5A is a schematic diagram of indicating an identifier of a first time-frequency resource by a network element 1 by using a time distribution of a sent DRS;
FIG. 5B is a schematic diagram of indicating an identifier of a first time-frequency resource by a network element 1 by using a time distribution of a sent DRS;
FIG. 6 is a schematic diagram of a network energy-saving effect achieved by broadcasting only a DRS or broadcasting only an SSB;
FIG. 7 is a schematic flowchart of another communication method according to an embodiment of this application;
FIG. 8 is a schematic flowchart of still another communication method according to an embodiment of this application;
FIG. 9 is a schematic flowchart of yet another communication method according to an embodiment of this application;
FIG. 10 is a schematic structural diagram of a network element according to an embodiment of this application; and
FIG. 11 is a schematic structural diagram of a UE according to an embodiment of this application.

### DESCRIPTION OF EMBODIMENTS

Technical solutions in embodiments of this application are clearly and fully described below with reference to the accompanying drawings in embodiments of this application. Terms used in the following embodiments are only intended to describe specific embodiments, and are not intended to limit this application. As used in this specification and the claims of this application, a singular expression form, "one", "a", "the", "foregoing", "said", or "this", is intended to include expression forms such as "one or more", unless clearly indicated to the contrary in the context. It should also be understood that, in embodiments of this application, "one or more" means one, two, or more than two, and "and/or" describes an association relationship between associated objects, indicating that three relationships may exist. For example, "A and/or B" may represent the following cases: only A exists, both A and B exist, and only B exists, where A and B may be singular or plural. The character "/" generally indicates an "or" relationship between associated objects.

Reference to "one embodiment", "some embodiments", or the like described in this specification means that a specific feature, structure, or characteristic described in combination with the embodiment is included in one or more embodiments of this application. Therefore, phrases "in an embodiment", "in some embodiments", "in some other embodiments", "in some additional embodiments", and the like appearing in different parts of this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

"A plurality of" involved in embodiments of this application means being greater than or equal to two. It should be noted that, in the description of embodiments of this application, terms such as "first" and "second" are merely used for distinguishing, and cannot be understood as an indication or implication of relative importance, or an indication or implication of a sequence.

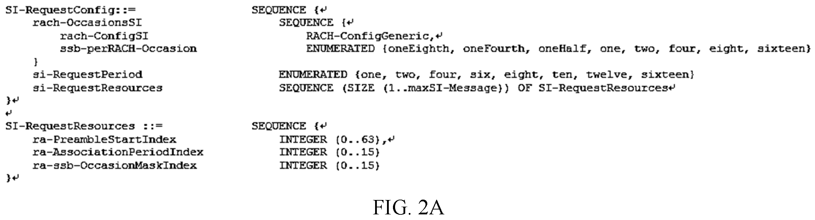

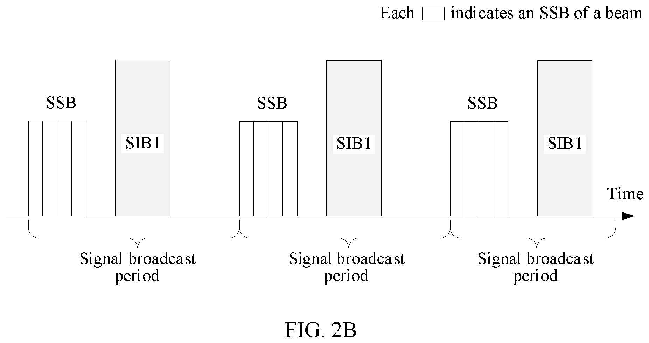

In system information (system information, SI) of a network element, besides a SIB1, for the remaining system information, the network element may provide the remaining system information to a UE when the UE needs the remaining system information (on-demand). For example, a configuration as shown in FIG. 2A may be adopted in a standard, to define a time-frequency domain resource used when the UE requests SI from the network element. Therefore, the network element periodically broadcasts the SSB and the SIB1 required for the UE to access the network element. A period for the network element to broadcast the SSB and the SIB1 may be, for example, 20 milliseconds (ms), or may be a period of another size. As shown in FIG. 2B, the network element typically periodically broadcasts the SSB and the SIB1 on a plurality of beams (FIG. 2B is described by using an example in which the SSB is broadcast on four beams). In this way, the UE may synchronize with the network element based on the received SSB. Specifically, the synchronization may be downlink synchronization, and the downlink synchronization includes clock synchronization, radio frame synchronization, symbol synchronization, obtaining an identifier of the network element (a cell), and the like. Then, the UE may decode the received SIB1 based on an MIB carried through a PBCH in the SSB, so as to obtain basic configuration information required for accessing the network element. However, if a network element 1 continuously sends the SSB and the SIB1 on a plurality of beams, relatively large power consumption is caused for the network element 1.

Therefore, this application provides a communication system. The communication system may be a fifth generation (5G) communication system, may also be a mixed architecture of LTE and 5G, a 5G new radio (5G New Radio, 5G NR) system, a new communication system appearing in future communication development, and the like.

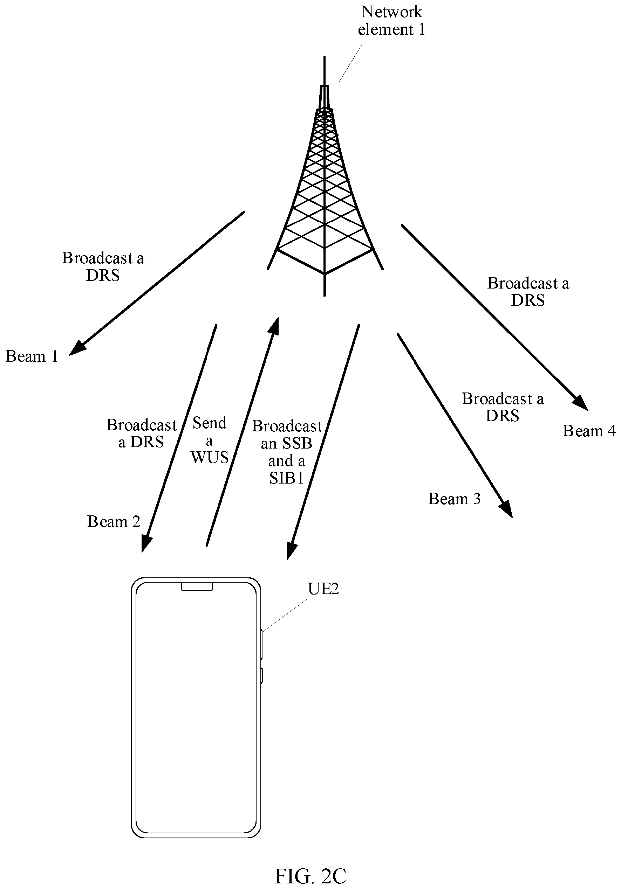

An example of the communication system is shown in FIG. 2C, and the communication system includes the network element 1 and a UE2.

In embodiments provided in this application, the network element 1 may be any device that is located at a network side and has a wireless transceiver function, including but not limited to: a base station (gNodeB or gNB) or a transmission receiving point/transmission reception point (transmission receiving point/transmission reception point, TRP) in new radio (new radio, NR), or the like. The network element 1 may be a macro base station, a micro base station, a Picocell, a small cell, a relay station, a balloon station, or the like. The network element 1 may include one or more co-sited or non-co-sited transmission reception points (Transmission Reception Point, TRP). The network element 1 may alternatively be a radio controller, a centralized unit (centralized unit, CU), and/or a distributed unit (distributed unit, DU) in a cloud radio access network (cloud radio access network, CRAN) scenario. The network element 1 may communicate with a terminal device, and may also communicate with the terminal device through a relay station.

The UE2 may communicate with a plurality of base stations of different technologies. For example, the UE2 may communicate with a base station supporting an LTE network, may also communicate with a base station supporting a 5G network, or may communicate with a base station of a 3G or 2G network, or communicate with a base station of a higher standard such as 6G, and may also perform dual connectivity with a base station supporting an LTE network and a base station supporting a 5G network.

In embodiments provided in this application, the UE2 may have various forms, such as a mobile phone (mobile phone), a tablet computer (Pad), a computer with a wireless transmission reception function, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in smart city (smart city), a wireless terminal in smart home (smart home), and a wearable terminal device. The UE may also be referred to as a terminal device, an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

The above is described by using an example in which the communication system includes the network element 1 and the UE2. In another possible implementation, the communication system may include a plurality of UEs or a plurality of network elements. Alternatively, in another possible implementation, the network element 1 in the communication system may be replaced by a network element in another form. This is not limited. For ease of understanding, a description is provided by using an example in which the UE2 and the network element 1 interact with each other.

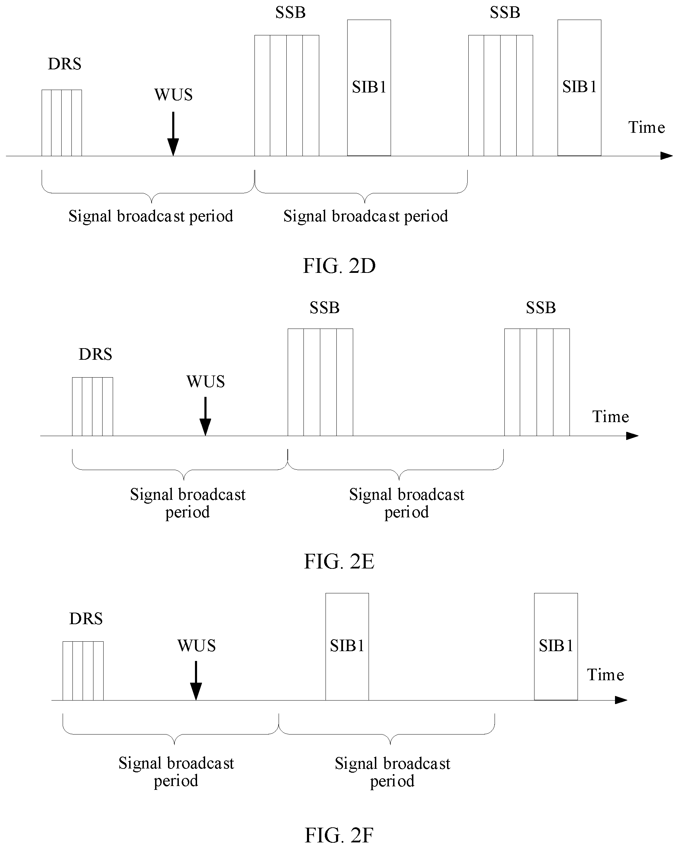

In the communication system shown in FIG. 2C, the network element 1 may periodically broadcast, with relatively low power consumption, a discovery reference signal (discovery reference signal, DRS) for downlink synchronization. The broadcast DRS is used for by the UE to synchronize with the network element, to reduce power consumption of the network element 1, and achieve network energy saving (network energy saving, NES). Further, when the UE2 needs to access the network element 1, the UE2 may send a wake-up signal (wake up signal, WUS) to the network element 1, so that the network element 1 can start broadcasting the SSB and the SIB1 after receiving the WUS. In this way, the UE2 can normally access the network element 1 based on the SSB and the SIB1 broadcast by the network element 1. The SSB and the SIB1 broadcast by the network element 1 herein may be directionally sent to the UE2 device, thereby saving energy consumption, as shown in FIG. 2C. As shown in FIG. 2D, a timing diagram shows that in a signal broadcast period, a network element 1 broadcasts a DRS, and the network element 1 broadcasts an SSB and a SIB1 after a UE2 sends a WUS.

During actual application, in the communication system shown in FIG. 2C, in addition to an implementation corresponding to the timing diagram in FIG. 2D, another implementation may alternatively be performed. Some descriptions are given below with reference to the accompanying drawings.

In Implementation 1, the network element 1 may periodically broadcast the DRS (without broadcasting the SSB and the SIB1), and broadcast only the SSB after receiving the WUS sent by the UE2. As shown in FIG. 2E, a timing diagram shows that in a signal broadcast period, a network element 1 broadcasts a DRS, and the network element 1 broadcasts an SSB after a UE2 sends a WUS.

In Implementation 2, the network element 1 may periodically broadcast the DRS (without broadcasting the SSB and the SIB1), and broadcast only the SIB1 after receiving the WUS sent by the UE2. As shown in FIG. 2F, a timing diagram shows that in a signal broadcast period, a network element 1 broadcasts a DRS, and the network element 1 broadcasts a SIB1 after a UE2 sends a WUS.

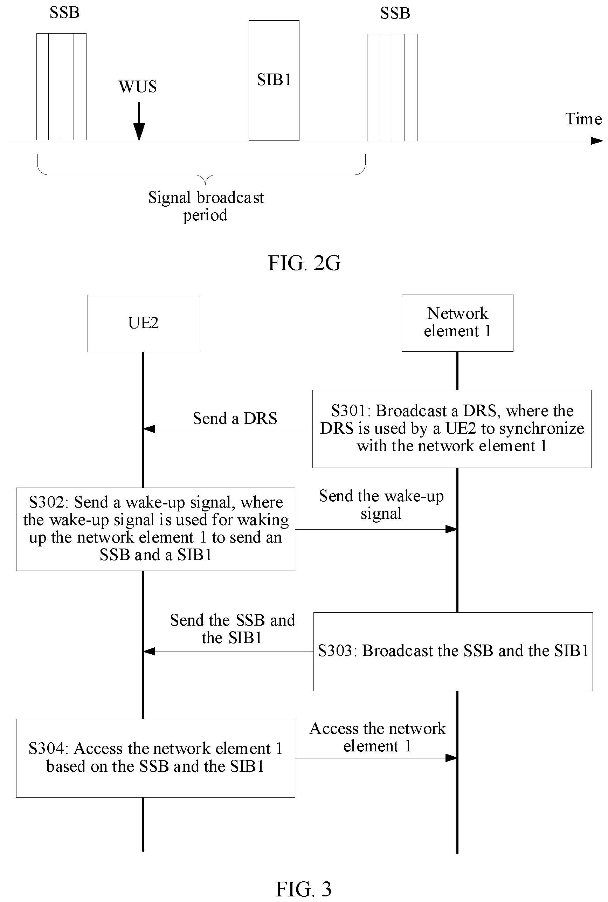

In Implementation 3, the network element 1 may periodically broadcast the SSB (without broadcasting the SIB1), and broadcast the SIB1 after receiving the WUS sent by the UE2. As shown in FIG. 2G, a timing diagram shows that a network element broadcasts an SSB, and the network element 1 broadcasts a SIB1 after a UE2 sends a WUS.

Refer to FIG. 3. A communication method according to an embodiment of this application is shown. The communication method shown in FIG. 3 may be applied to the communication system shown in FIG. 2C, or may be applied to other possible communication systems. For ease of understanding and description, a description is provided below by using an example in which the communication method is applied to the communication system shown in FIG. 2C. As shown in FIG. 3, a process of the communication method includes the following steps.

S301: A network element 1 broadcasts a DRS, where the DRS is used by a UE2 to synchronize with the network element 1.

In this embodiment, the network element 1 may send the DRS with relatively low power consumption, and specifically broadcast the DRS. In this way, the UE2 in an idle state (idle) or an inactive state (inactive) within signal coverage of the network element 1 can perform synchronization with the network element 1 by using the DRS. The synchronization may specifically be downlink synchronization.

The DRS sent by the network element 1 may have the following three non-limiting implementations.

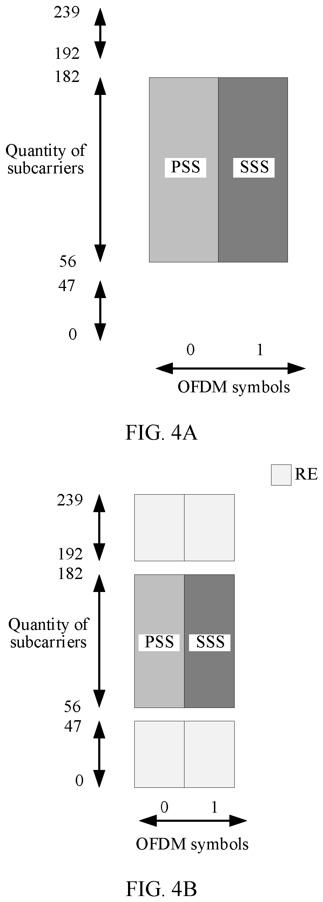

In a first implementation example, as shown in FIG. 4A, the DRS may include only a PSS and an SSS. In addition, the DRS may occupy two OFDMs in time domain, where the PSS occupies the first of the OFDMs, and the SSS occupies the second of the OFDMs. In the meantime, the DRS may occupy 127 subcarriers in frequency domain, and the PSS and the SSS respectively occupy 127 subcarriers in different time domain positions. In this embodiment, after receiving the DRS, the UE2 specifically completes downlink synchronization based on the PSS and the SSS in the DRS.

It should be noted that in the DRS shown in FIG. 4A, the subcarriers occupied by the PSS and the SSS are merely used as an implementation example, and are not intended to be limiting. For example, in another implementation example, a quantity of subcarriers occupied by the PSS and the SSS may have another value, and the subcarriers occupied by the PSS and the SSS in frequency domain may also be other subcarriers.

In a second implementation example, as shown in FIG. 4B, the DRS may include a PSS, an SSS, and one or more reserved resource elements (resource elements, REs). In FIG. 4B, an example in which a plurality of REs are reserved is used for description. In this case, the DRS may still occupy two OFDMs in time domain, where the PSS occupies the first of the OFDMs, and the SSS occupies the second of the OFDMs. In the meantime, the DRS may occupy 127 subcarriers in frequency domain, and the PSS and the SSS respectively occupy 127 subcarriers in different time domains.

It should be noted that the subcarriers occupied by the PSS, the SSS, and the RE shown in FIG. 4B are merely used as an implementation example, and are not intended to be limiting. For example, in another implementation example, a quantity of subcarriers occupied by the PSS and the SSS may have another value, and the subcarriers occupied by the PSS and the SSS in frequency domain may also be other subcarriers. In addition, a quantity of subcarriers occupied by the RE may have another value, and the subcarriers occupied in frequency domain may be other subcarriers.

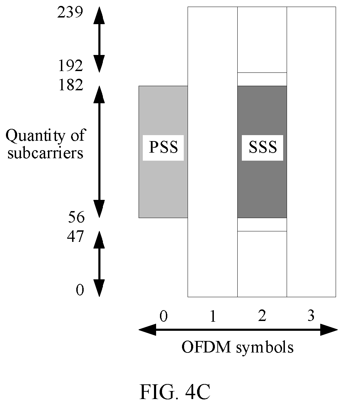

In a third implementation example, as shown in FIG. 4C, the DRS may reuse a structure of the SSB, which not only may include a PSS and an SSS, but also may include a PBCH. In this case, the DRS may occupy four OFDMs in time domain, where the PSS occupies the first of the OFDMs, and the SSS occupies the third of the OFDMs. In the meantime, the DRS may occupy 240 subcarriers in frequency domain, and the PSS and the SSS respectively occupy 127 subcarriers in different time domains. When sending the DRS, the network element 1 may carry MIB information in the PBCH in a manner of sending the SSB. Alternatively, in the DRS sent by the network element 1, the PBCH may carry no information. For example, an RE where the PBCH is located is of zero power, thereby saving energy consumption generated when the network element 1 sends data carried on the PBCH. In addition, the network element 1 does not send the SIB1 when sending the DRS.

It should be noted that the subcarriers occupied by the PSS, the SSS, and the PBCH in the DRS shown in FIG. 4C are merely used as an implementation example, and are not intended to be limiting.

In a fourth implementation example, the DRS may also be a low-power synchronization signal (low power synchronization signal, LP-SS), and the UE2 within the signal coverage can achieve downlink synchronization with the network element 1 based on the received LP-SS.

It may be understood that the foregoing four implementations are merely used as some descriptions. In another embodiment, the DRS sent by the network element 1 may also be implemented in another manner. For example, the DRS may occupy three or five symbols in time domain. This is not limited.

During actual application, the network element 1 may periodically broadcast the DRS. The period may be, for example, 20 milliseconds (ms), or may be 40 ms. This is not limited. For ease of description, a period in which the network element 1 sends a signal is referred to as a signal broadcast period below.

In a possible implementation, within each signal broadcast period, the network element 1 may send the DRS separately on a plurality of beams. For example, the network element 1 may separately send the DRS on 8 or 64 beams. In addition, on each of the beams, the network element 1 may send one DRS, or may send a plurality of DRSs. The network element 1 may use different time domains when sending the DRS on different beams.

Alternatively, within each signal broadcast period, the network element 1 may send the DRS without distinguishing between the beams. In this case, the network element 1 may send one DRS, or the network element may send a plurality of DRSs, so that the UE2 can increase a success rate of decoding the DRS based on the plurality of DRSs.

S302: The UE2 sends a wake-up signal to the network element 1, where the wake-up signal is used for waking up the network element 1 to send an SSB and a SIB1.

In an actual application scenario, when the UE2 needs to access the network element 1, the UE2 may send a wake-up signal to the network element 1, to request the network element 1 to send access configuration information required for the UE2 to access the network element 1, that is, information carried in the SSB and the SIB1.

Specifically, the UE2 may achieve downlink synchronization by using the received DRS, and may further determine a time-frequency resource used for sending the WUS to the network element 1. For ease of distinction, the time-frequency resource is referred to as a first time-frequency resource below. The first time-frequency resource includes a time-domain resource and a frequency-domain resource. The time-domain resource may be, for example, a slot and an OFDM symbol that can be occupied by the UE2 in time domain, and the frequency-domain resource may be, for example, one or more REs that can be occupied by the UE2 in frequency domain.

In this embodiment, the following several example implementations for determining the first time-frequency resource are provided.

In a first possible implementation, the UE2 may determine, based on one or more received DRSs, the first time-frequency resource used when sending the WUS, and may specifically determine an identifier of the first time-frequency resource.

During specific implementation, one or more time-frequency resources that can be used by the UE for sending the WUS may be defined in a standard (such as release 19). For example, a table may be defined in the standard, and the table may record indexes (indexes) of a plurality of types of time-frequency resources. Each of the indexes is used for identifying one or more time-frequency resources. Correspondingly, the network element 1 may incorporate the identifier of the first time-frequency resource into the DRS when broadcasting the DRS.

In Example 1, the network element 1 may send one or more DRSs within a signal broadcast period based on the identifier of the first time-frequency resource when broadcasting the DRS. Correspondingly, the UE2 may determine the identifier of the first time-frequency resource based on a time distribution of the received DRS within a single signal broadcast period. In this case, the DRS broadcast by the network element 1 may be, for example, the DRS shown in FIG. 4A(which may include only a PSS and an SSS).

For example, it is assumed that a table including indexes of 15 time-frequency resources may be defined in a standard, and the indexes of the 15 time-frequency resources are respectively 0001, ..., and 1111. Therefore, a signal broadcast period may include four occasions for sending the DRS, and the network element 1 may indicate information about four bits, that is, indicate an index of the first time-frequency resource, by sending or not sending the DRS on the four occasions.

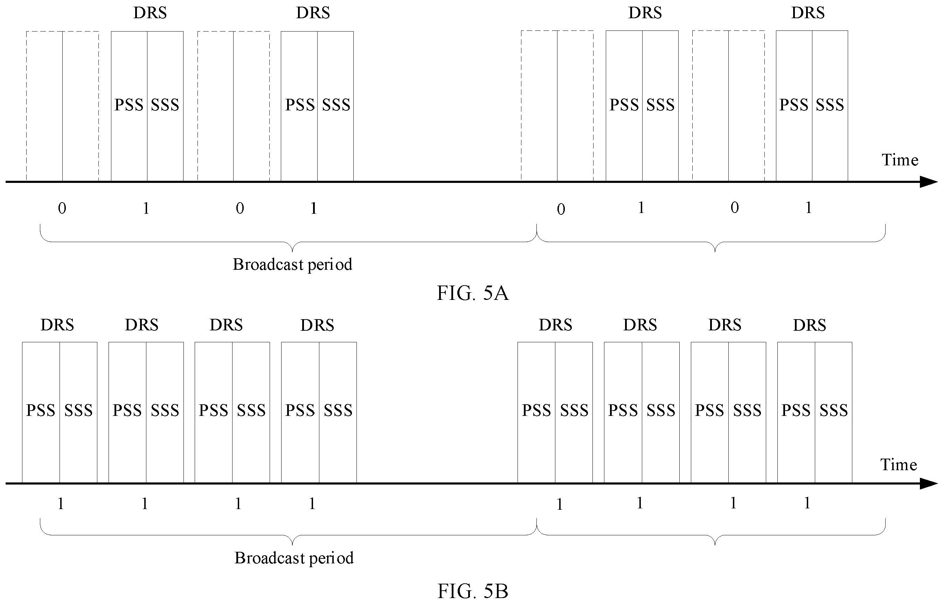

As shown in FIG. 5A, assuming that the identifier of the first time-frequency resource is "0101", the network element 1 may not send the DRS on a first occasion and a third occasion within a signal broadcast period, where values of a first bit and a third bit are correspondingly 0; and may send the DRS on a second occasion and a fourth occasion, where values of a second bit and a fourth bit are correspondingly 1. In this way, the UE2 may determine, based on the time distribution of the received DRS, that the index of the first time-frequency resource is "0101".

As shown in FIG. 5B, assuming that the identifier of the first time-frequency resource is "1111", the network element 1 may send the DRS on each occasion within a signal broadcast period, so that the UE2 may determine, based on the time distribution of the received DRS, that the values of the four bits are all 1, that is, determine that the index of the first time-frequency resource is "1111". In this way, the UE2 can send the WUS to the network element 1 on the first time-frequency resource indicated by "0101" or "1111".

In Example 2, the network element 1 may add the identifier of the first time-frequency resource to the DRS when generating the DRS, and may specifically carry the identifier of the first time-frequency resource by using one or more reserved REs in the DRS. For example, the DRS generated by the network element 1 may be shown in FIG. 4B. Then, the network element 1 may carry the identifier of the first time-frequency resource by using an RE on a first OFDM symbol or a second OFDM symbol. Alternatively, the DRS generated by the network element 1 may be shown in FIG. 4C. Then, the network element 1 may carry the identifier of the first time-frequency resource by using at least one RE on the PBCH. In this way, after receiving the DRS, the UE2 may parse the identifier of the first time-frequency resource from the at least one RE included in the DRS.

In Example 3, the network element 1 may use the identifier of the first time-frequency resource as a generation parameter of a coding sequence of the DRS when generating the DRS. For example, when the identifier of the first time-frequency resource is identified by using four bits, the network element 1 may use values of the four bits as a value of a Cinit parameter for generating an initial value of a scrambling sequence of the PSS and/or the SSS. Correspondingly, after receiving the DRS, the UE2 obtains the identifier of the first time-frequency resource by decoding the DRS. For example, assuming that the identifier of the first time-frequency resource is indicated by using values of four bits, the UE2 may traverse all value combinations of the four bits, and determine a coding sequence of the DRS corresponding to each value combination of the four bits. Then, the UE2 may match the coding sequence of the DRS corresponding to each value combination with the coding sequence of the received DRS. When the coding sequence of the DRS corresponding to one of the value combinations matches the coding sequence of the DRS received by the UE2, the UE2 may determine the value combination of the four bits as the identifier indicating the first time-frequency resource.

During actual application, the UE2 may also determine the identifier of the first time-frequency resource in another manner based on the received DRS. This is not limited.

The first time-frequency resource indicated by the network 1 may be, for example, a resource on a random access channel (random access channel, RACH). Specifically, the first time-frequency resource includes one or more random access channel occasions (random access channel occasion, RO), so that the UE2 may send the WUS signal to the network element 1 by using the RACH based on the RO. During actual application, the first time-frequency resource may be either a RACH resource or another applicable resource. This is not limited.

Further, when the first time-frequency resource is the RACH resource, the identifier indicating the first time-frequency resource may further indicate that the UE2 sends a candidate preamble of the WUS by using the RACH resource.

In a second possible implementation, the UE2 may also independently determine the first time-frequency resource used for sending the WUS, without intervention from the network element 1.

In Example 1, one or more time-frequency resources that can be used by the UE for sending the WUS may be defined in a standard (such as release 19). In this way, the UE2 may select one type of time-frequency resource from a plurality of predefined types of time-frequency resources to send the WUS. For example, the UE2 may randomly select, from the plurality of types of time-frequency resources, a first time-frequency resource for sending the WUS. Alternatively, the UE2 may perform calculation based on an identifier of the UE2, for example, perform hash or modulo processing on the identifier of the UE2, so as to select the first time-frequency resource from the plurality of types of time-frequency resources based on a calculation result. This is not limited.

In Example 2, a plurality of types of time-frequency resources that can be used by the UE for sending the WUS may be defined in a standard (such as release 19). When determining the first time-frequency resource, the UE2 may first determine at least one type of time-frequency resource associated with the UE2. For example, the plurality of types of time-frequency resources defined in the standard may be divided into a plurality of groups based on identifiers of the UE. Each of the groups includes at least one type of time-frequency resource, so that the UE2 may determine, based on an identifier thereof, a group in which the UE2 is located, and the time-frequency resource in the group is a time-frequency resource associated with the UE2. Then, the UE2 may determine, from the at least one type of time-frequency resource associated with the UE2, the first time-frequency resource for sending the WUS. For example, the first time-frequency resource may be determined by random selection.

The first time-frequency resource determined by the UE2 may be, for example, a resource on a RACH, or may be another applicable resource. This is not limited.

In a third possible implementation, the network element 1 may also send group-common (group-common) downlink control information (downlink control information, DCI). The group-common DCI may define time-frequency resources that can be used by a plurality of UEs to send the WUS to the network element 1. The group-common DCI may include a plurality of bits. Consecutive partial bits in the plurality of bits indicate a time-frequency resource that can be used by a UE. Different partial bits in the plurality of bits indicate time-frequency resources that can be used by different UEs. In this way, after receiving the group-common DCI, the UE2 may parse, from the group-common DCI, the identifier of the first time-frequency resource that can be used by the UE2, to determine the first time-frequency resource used for sending the WUS.

During actual application, the UE2 may also determine the first time-frequency resource in another manner. This is not limited.

When the UE2 sends the WUS through 2-step-RACH (2-step-RACH) or 4-step-RACH (4-step-RACH), the first time-frequency resource may be one or more ROs defined in the standard. Correspondingly, the network element 1 may detect the RACH within a preset resource window, to determine whether a signal exists on the RACH. A length of the resource window in time domain may be determined based on signal coverage of the network element 1. For example, greater signal coverage indicates a larger length of the resource window in time domain. After determining, by detecting the RACH within the resource window, that a signal is received, the network element 1 may identify, based on a preamble on the RO, that the signal is a WUS.

Alternatively, the WUS sent by the UE2 on the first time-frequency resource may be a specific coding sequence, for example, may be a low peak-to-average power ratio code (peak-to-average power ratio, PAPR), or may be a pseudo random code (pseudo random code). Correspondingly, after decoding the received signal, the network element 1 may determine whether the sequence obtained through decoding is a specific coding sequence. If the sequence is the specific coding sequence, the network element 1 may determine that the signal is a WUS. If the sequence is not the specific coding sequence, the network element 1 may determine that the signal is not a WUS.

Alternatively, the WUS sent by the UE2 on the first time-frequency resource may be any codeword. In this case, the network element 1 may detect a magnitude of energy of a signal sent through the first time-frequency resource. When the energy of the signal is greater than a threshold, the network element 1 may determine that the signal is a WUS. Otherwise, the network element 1 may determine that the signal is not a WUS. In this way, the network element 1 may not need to decode the received signal, so as to simplify implementation logic for the network element 1 to determine reception of the WUS, and save energy consumption generated by decoding the signal.

During actual application, a process in which the UE2 sends the WUS to the network element 1 may also be implemented in another manner. For example, the foregoing plurality of implementations may be combined. This is not limited.

During actual application, in addition to sending the WUS to the network element 1 when needing to access the network element 1, the UE2 may also send a wake-up signal to the network element 1 in another scenario.

For example, when the DRS broadcast by the network element 1 is specifically an LP-SS, the UE2 may detect signal quality of the received LP-SS, and when detecting that the signal quality of the LP-SS is relatively low, the UE2 may send a WUS to the network element 1. In this case, the network element 1 may broadcast an SSB after receiving the WUS, so that the UE2 can receive the SSB, and detect whether signal quality of the received SSB meets a requirement. For example, when the signal quality of the SSB received by the UE2 is also relatively low, the UE2 may switch a network element to be accessed, for example, may switch to a network element with relatively high signal quality. Further, the network element 1 may further broadcast a SIB1 after broadcasting the SSB, so that the UE2 may access the network element 1 based on the SSB and the SIB1. For example, when the signal quality of the SSB received by the UE2 is relatively high, the UE2 may determine to access the network element 1, and may access the network element 1 based on the received SSB and the SIB1.

In addition, when the UE2 detects that the signal quality of the LP-SS is relatively low, the UE2 may not send the WUS to the network element 1, and maintain downlink synchronization with the network element 1 based on the received LP-SS.

When the DRS broadcast by the network element 1 is specifically the LP-SS, the UE2 may determine, by referring to the foregoing manner of determining the first time-frequency resource, the first time-frequency resource for sending the WUS. Details are not described herein.

S303: The network element 1 broadcasts the SSB and the SIB1.

In this process, the network element 1 broadcasts the SSB and the SIB1 signal based on the received wake-up signal, and a quantity of times for broadcasting the SSB and the SIB1 is a limited quantity of times. For example, broadcasting and sending are performed twice. The network element 1 broadcasts the SSB and the SIB1 signal based on the received wake-up signal. The SSB and the SIB1 are broadcast for a limited quantity of times, so that the UE2 that is to access the network can receive the SSB and the SIB1. Compared with the conventional technology in which a base station/the network element 1 sends the SSB and the SI signal periodically (every 20 ms by default), this saves energy consumption.

Further, the network element 1 broadcasts and sends the SSB signal, and a quantity of times for broadcasting the SSB is a limited quantity of times. For example, broadcasting and sending are performed twice. After receiving the SSB signal, the UE2 accesses the network element 1 based on the SSB signal; or the network element 1 broadcasts and sends the SIB1 signal, and a quantity of times for broadcasting the SIB1 is a limited quantity of times. For example, broadcasting and sending are performed twice. After receiving the SIB1 signal, the UE2 accesses the network element 1 based on the SIB1 signal.

S304: The UE2 accesses the network element 1 based on the SSB and the SIB1.

When the network element 1 determines that the UE sends a WUS, it indicates that the UE currently needs to access the network element 1. Therefore, the network element 1 enters, from a state of broadcasting the DRS with low power consumption, a state of broadcasting a signal with relatively high power consumption, which is specifically a state of broadcasting the SSB and the SIB1 with relatively high power consumption.

In this way, after receiving the SSB and the SIB1, the UE2 not only can continue to maintain downlink synchronization based on the PSS and the SSS in the SSB, but also can decode information in the SIB1 based on MIB information in the SSB, to obtain configuration information required for accessing the network element 1, so that the UE2 can implement access to the network element 1 based on the configuration information obtained through decoding, and can further establish a connection with the network element 1, such as a radio resource control (radio resource control, RRC) connection.

In a first implementation example, after receiving the WUS, the network element 1 may resume periodic broadcasting of the SSB and the SIB1, so that one or more UEs (including the UE2) within signal coverage of the network element 1 can access the network element 1 based on the received SSB and SIB1.

In a second implementation example, after receiving the WUS, the network element 1 may broadcast the SSB and the SIB1 within a preset quantity of signal broadcast periods. For example, the network element 1 may continuously broadcast the SSB and the SIB1 within two signal broadcast periods. After completing the broadcasting of the SSB and the SIB1 within the preset quantity of signal broadcast periods, the network element 1 may reenter a state of broadcasting the DRS with low power consumption, until the network element 1 receives the WUS again and then restarts broadcasting the SSB and the SIB1.

The quantity of times that the network element 1 continuously broadcasts the SSB and the SIB1 may be defined in the standard. Alternatively, when previously broadcasting the DRS, the network element 1 may carry, in the DRS, the quantity of times the network element 1 continuously broadcasts the SSB and the SIB1 after receiving the WUS, so that the UE2 increases a success rate of signal decoding by continuously receiving the SSB and the SIB1. The implementation of carrying, in the DRS, the quantity of times the SSB and the SIB1 are continuously broadcast is similar to the implementation of carrying, in the DRS, the identifier of the first time-frequency resource. Refer to the foregoing related descriptions. Details are not described herein.

In a third implementation example, the network element 1 may determine, based on a current load condition, whether to continue broadcasting the DRS with low power consumption or broadcast the SSB and the SIB1 with relatively high power consumption. For example, after receiving the WUS, the network element 1 may obtain a load thereof, and determine whether the load is greater than a load threshold. When the load of the network element 1 is greater than the load threshold, the network element 1 may continue to broadcast the DRS with low power consumption, so as to avoid an excessively large load of the network element 1 caused after the UE2 accesses the network element 1. When the load of the network element 1 is lower than or equal to the load threshold, it indicates that the network element 1 has sufficient capability to serve a new UE. Therefore, the network element 1 may start to broadcast the SSB and the SIB1, to support the UE2 (and another UE) in accessing the network element 1.

It should be noted that because the UE2 can complete the downlink synchronization with the network element 1 based on the SSB, during broadcasting of the SSB and the SIB1 by the network element 1, the network element 1 may no longer send the DRS signal. Similarly, during the DRS, the network element 1 does not send the SSB and the SIB1.

In this embodiment, the network element 1 may not perform beam differentiation during broadcasting of the SSB and the SIB1, that is, within each signal broadcast period, the network element 1 may send only one SSB and SIB1.

Alternatively, the network element 1 may also broadcast the SSB and the SIB1 by performing beam differentiation, so that the network element 1 can separately send the SSB and the SIB1 on a plurality of beams after receiving the WUS. In other words, within each signal broadcast period, the network element 1 may send a plurality of SSBs and a plurality of SIB1s.

It should be noted that in this embodiment, a description is provided by using an example in which the UE2 wakes up the network element 1 to send the SSB and the SIB1 based on the DRS broadcast by the network element 1. During actual application, the signal coverage of the network element 1 may further include another UE, and after receiving the DRS, the another UE may also achieve downlink synchronization based on the DRS, and send a WUS to the network element 1 by using a second time-frequency resource. Alternatively, after the UE2 wakes up the network element 1 to send the SSB and the SIB1, another UE within the signal coverage of the network element 1 may achieve downlink synchronization and access the network element 1 based on the received SSB and SIB1.

In this embodiment, before the network element 1 obtains the WUS, the UE2 can achieve downlink synchronization by obtaining the DRS that includes the PSS and the SSS and that is sent by the network element 1. In this way, the network element 1 does not need to send the SSB, and also does not need to send the SIB1, so that the network element 1 can save energy consumption generated by sending the SIB1, to achieve energy saving.

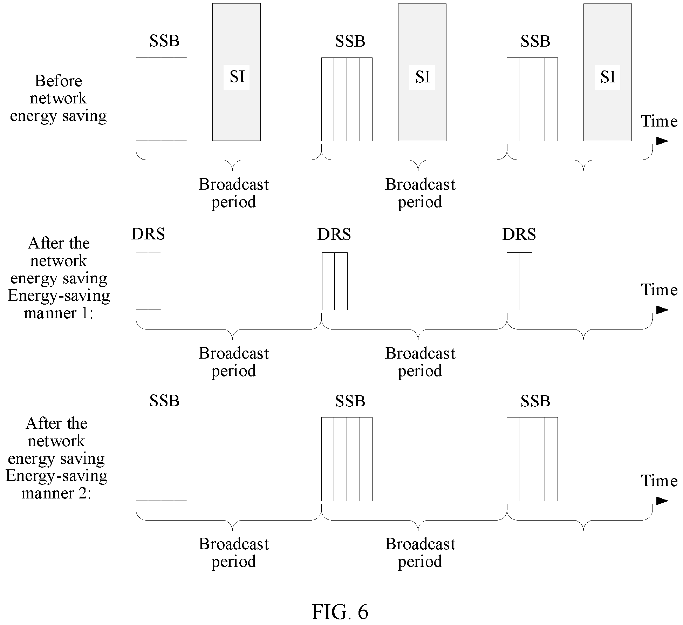

Further, in an actual application scenario, the DRS may be, for example, the DRS shown in FIG. 4A or FIG. 4B. In this case, information carried in the DRS usually may be less than information carried in the SSB. For example, the DRS may occupy only two OFDM symbols in time domain. This enables energy consumption generated by the network element 1 by sending the DRS before obtaining the wake-up signal to be less than energy consumption generated by sending the SSB, so that the network element 1 can further achieve energy saving, as shown in FIG. 6 (that is, an energy-saving effect corresponding to an energy-saving manner 1).

It should be noted that in this embodiment, a description is provided by using an example in which the network element 1 broadcasts the SSB and the SIB1 after the UE2 sends the WUS. In another embodiment, the network element 1 may broadcast only the SSB or only the SIB1 after receiving the WUS, and the UE2 can access the network element 1 based on the SSB or the SIB1 broadcast by the network element 1. A description is provided below.

In a first implementation, the network element 1 may broadcast only the SSB after receiving the WUS.

During specific implementation, the UE2 may pre-store SIB1 information of the network element 1 locally. For example, when the UE2 camps on the network element 1, the UE2 may receive a signal broadcast by the network element 1. Before the UE2 expects to access the network element 1, the network element 1 may perform an operation of broadcasting the SIB1 (and the SSB) within a period of time. For example, the network element 1 may broadcast the SSB and the SIB1 at a relatively long period (for example, every 10 seconds). In this case, although the UE2 does not have a requirement for accessing the network element 1, the UE2 may locally pre-store the SIB1 information broadcast by the network element 1. In this way, when the network element 1 is in a state of periodically broadcasting the DRS, and the UE2 needs to access the network element 1, the UE2 may send the WUS to the network element 1 based on the DRS broadcast by the network element 1, to trigger the network element 1 to broadcast the SSB. In this way, based on the SSB broadcast by the network element 1, the UE2 not only can achieve downlink synchronization with the network element 1, but also can obtain an MIB carried in the SSB. Then, the UE2 may decode the locally stored SIB1 information based on the MIB, to obtain access configuration information required for accessing the network element 1, and further access the network element 1 based on the access configuration information.

Certainly, the UE2 may also pre-store the SIB1 information locally in another manner. This is not limited in embodiments.

In a second implementation, the network element 1 may broadcast only the SIB1 after receiving the WUS.

During specific implementation, the UE2 may locally pre-store MIB information required for decoding the SIB1 of the network element 1. For example, when the UE2 camps on the network element 1, the UE2 may receive a signal broadcast by the network element 1. Before the UE2 expects to access the network element 1, the network element 1 may perform an operation of broadcasting the SSB (and the SIB1) within a period of time. For example, the network element 1 may broadcast the SSB and the SIB1 at a relatively long period (for example, every 10 seconds). In this case, although the UE2 does not have a requirement for accessing the network element 1, the UE2 may locally pre-store the MIB information carried in the SSB broadcast by the network element 1. In this way, when the network element 1 is in a state of periodically broadcasting the DRS, and the UE2 needs to access the network element 1, the UE2 may send the WUS to the network element 1 based on the DRS broadcast by the network element 1, to trigger the network element 1 to broadcast the SIB1. In this way, the UE2 can achieve downlink synchronization with the network element 1 based on the DRS broadcast by the network element 1, and can decode the SIB1 broadcast by the network element 1 based on the locally stored MIB information, to obtain access configuration information required for accessing the network element 1, so that the UE2 may further access the network element 1 based on the access configuration information.

Certainly, the UE2 may also pre-store the MIB information locally in another manner. This is not limited in embodiments.

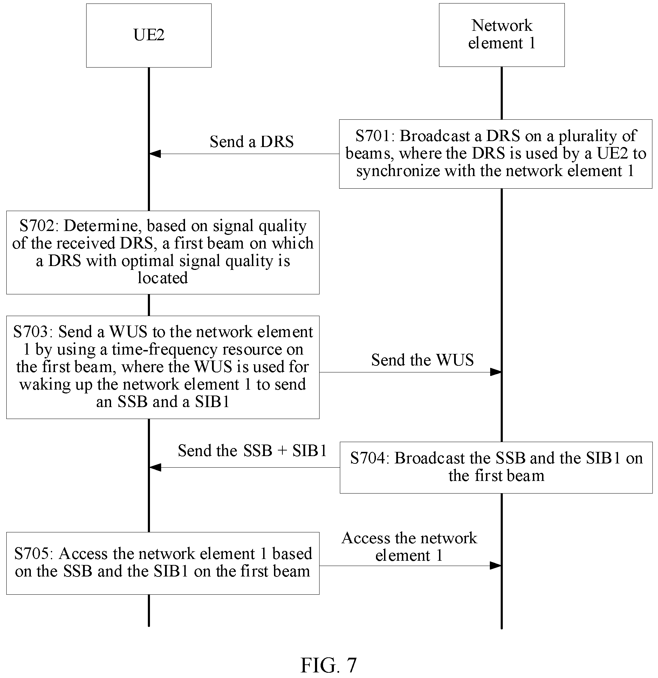

In the embodiment shown in FIG. 3, the network element 1 may broadcast the SSB and the SIB1 on a plurality of beams after receiving the WUS. In another embodiment, the network element 1 may also broadcast the SSB and the SIB1 on a specified first beam, and does not broadcast the SSB and the SIB1 on other beams. A detailed description is provided below with reference to FIG. 7.

Refer to FIG. 7. A schematic flowchart of another communication method is shown. As shown in FIG. 7, a process of the communication method includes the following steps.

S701: A network element 1 broadcasts a DRS on a plurality of beams, where the DRS is used by a UE2 to synchronizing with the network element 1.

S702: The UE2 determines, based on signal quality of the received DRS, a first beam on which a DRS with the optimal signal quality is located.

During specific implementation, the DRS broadcast by the network element 1 may carry an identifier of the DRS. For example, the identifier of the DRS may be used as a generation parameter of a coding sequence of the DRS, so that the DRS carries the identifier thereof, or the DRS may be the DRS shown in FIG. 4B, so that some REs in the DRS can carry the identifier of the DRS.

After receiving the DRSs on the plurality of beams, the UE2 may determine, through signal measurement, the DRS with the optimal signal quality, and parse the identifier of the DRS from the DRS. Then, the UE2 may determine, based on the parsed identifier of the DRS, a beam used for carrying the DRS. For ease of distinction, in this embodiment, the beam is referred to as a first beam. For example, the UE2 may determine, based on a corresponding relationship between the identifier of the DRS and a beam identifier (which may be predefined in a standard), the first beam corresponding to the identifier of the DRS.

S703: The UE2 sends a WUS to the network element 1 by using a time-frequency resource on the first beam, where the WUS is used for waking up the network element 1 to send an SSB and a SIB1.

The manner in which the UE2 determines the time-frequency resource on the first beam may refer to the descriptions in the embodiment shown in FIG. 3 regarding determining the first time-frequency resource. Details are not described herein.

S704: The network element 1, after receiving the WUS, broadcasts the SSB and the SIB1 on the first beam.

During actual application, the network element 1 may detect whether a WUS exists on each beam, and determine, as the first beam, a beam on which the detected WUS is located. Correspondingly, the network element 1 may determine that a signal broadcast by the network element on the first beam can achieve optimal signal quality when transmitted to the UE2. In this way, the network element 1 may broadcast the SSB and the SIB1 on the first beam, and may not broadcast the SSB and the SIB1 on other beams (and may continue to broadcast the DRS). In this way, the network element 1 may not broadcast the SSB and the SIB1 in a high-power-consumption state on other beams while ensuring a success rate of the UE2 decoding the SSB and the SIB1, to further achieve energy saving of the network element 1.

S705: The UE2 accesses the network element 1 based on the SSB and the SIB1 on the first beam.

In this embodiment, for a specific implementation of step S705, refer to related descriptions in the foregoing embodiments. Details are not described herein.

Similarly, for other UEs within the signal coverage of the network element 1, the other UEs may also send the WUS to the network element 1 by using time-frequency resources on other beams (such as a second beam) through a process similar to the foregoing, so as to trigger the network element 1 to broadcast the SSB and the SIB1 on other beams.

Further, in another embodiment, after receiving the WUS sent on the first beam, the network element 1 may broadcast only the SSB or only the SIB1 on the first beam, and the UE2 may access the network element 1 based on the only broadcast SSB or the only broadcast SIB1 of the network element 1. For a specific implementation, refer to related descriptions in the embodiment shown in FIG. 3. Details are not described herein.

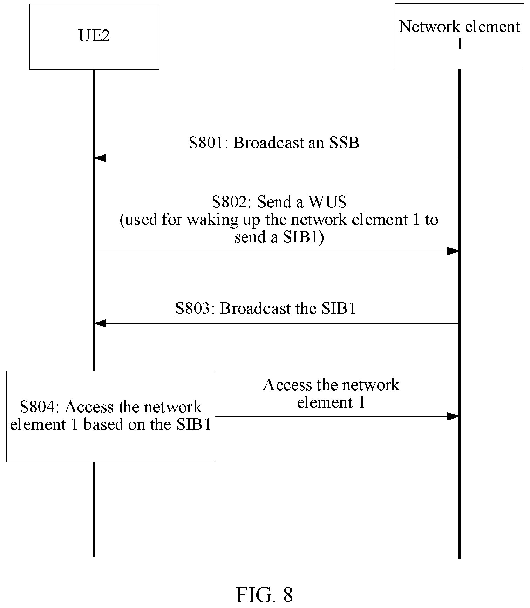

In embodiments shown in FIG. 3 and FIG. 7, the network element 1 achieves network energy saving (NES) by broadcasting the DRS. In another embodiment, the network element 1 may also achieve network energy saving by not broadcasting the SIB1. A detailed description is provided below with reference to FIG. 8.

Refer to FIG. 8. A schematic flowchart of another communication method is shown. The communication method shown in FIG. 8 may be applied to the communication system shown in FIG. 2C, or may be applied to other possible communication systems. For ease of understanding and description, a description is provided below by using an example in which the communication method is applied to the communication system shown in FIG. 2C. As shown in FIG. 8, a process of the communication method includes the following steps.

S801: A network element 1 broadcasts an SSB.

In this embodiment, the network element 1 does not periodically broadcast the SSB and a SIB1, but broadcasts only the SSB. In other words, the network element 1 does not need to send the SIB1, so that the network element 1 can save energy consumption generated by sending the SIB1, to achieve energy saving. In addition, the SSB includes a PSS and an SSS, so that a UE2 can achieve downlink synchronization based on the SSB sent by the network element 1.

The network element 1 may periodically broadcast the SSB. The period may be, for example, 20 ms, or may be 40 ms. This is not limited. For ease of description, a period in which the network element 1 sends a signal is referred to as a signal broadcast period below.

In a possible implementation, within each signal broadcast period, the network element 1 may send the SSB separately on a plurality of beams. For example, the network element 1 may separately send the SSB on 8 or 64 beams. In addition, on each of the beams, the network element 1 may send one SSB, or may send a plurality of SSBs. The network element 1 may use different time domain resources when sending the SSB on different resource beams.

Alternatively, within each signal broadcast period, the network element 1 may send the SSB without distinguishing between the beams. In this case, the network element 1 may send one SSB, or the network element may send a plurality of SSBs, so that the UE2 can increase a success rate of decoding the SSB based on the plurality of SSBs.

S802: The UE2 sends a WUS to the network element 1, where the WUS is used for waking up the network element 1 to send the SIB1.

In an actual application scenario, when the UE2 needs to access the network element 1, the UE2 may send a wake-up signal (WUS) to the network element 1, to request the network element 1 to send access configuration information required for the UE2 to access the network element 1, that is, information carried in the SIB1.

During specific implementation, after achieving downlink synchronization, the UE2 may further determine a first time-frequency resource for sending the WUS to the network element 1. The first time-frequency resource includes a time-domain resource and a frequency-domain resource. The time-domain resource may be, for example, a slot and an OFDM symbol that can be occupied by the UE2 in time domain, and the frequency-domain resource may be, for example, one or more REs that can be occupied by the UE2 in frequency domain. For example, at least one RE in the SSB broadcast by the network element 1 may carry an identifier of the first time-frequency resource, so that the UE2 may obtain the identifier of the first time-frequency resource by parsing the RE in the SSB, to determine the first time-frequency resource for sending the WUS. Alternatively, the network element 1 may send group-common DCI, so that the UE2 may parse the identifier of the first time-frequency resource from the received group-common DCI, to determine the first time-frequency resource for sending the WUS. Then, the UE2 may send the WUS to the network element 1 by using the determined first time-frequency resource. A coding sequence of the WUS sent by the UE2 may be a preset coding sequence. Alternatively, the UE2 may send the WUS on a RACH, or the like.

Correspondingly, the network element 1 may detect whether a coding sequence of the received signal is the preset coding sequence. If so, it is determined that the WUS sent by the UE2 is received. Alternatively, the network element 1 may detect, within a resource window, whether a signal located on a random access channel RACH exists. If so, it is determined that the WUS sent by the UE2 is received. Alternatively, the network element 1 may detect, on the first time-frequency resource, whether a signal whose energy is greater than a threshold exists. If so, it is determined that the WUS sent by the UE2 is received, or the like.

In this embodiment, for the implementation in which the UE2 determines the first time-frequency resource, the UE2 sends the WUS, and the network element 1 indicates the first time-frequency resource and determines that the WUS is received, refer to the related descriptions in the embodiment shown in FIG. 3. Details are not described herein.

S803: The network element 1 broadcasts the SIB1.

S804: The UE2 accesses the network element 1 based on the SIB1.

In this embodiment, the network element 1 may broadcast the SIB1 after receiving the WUS, so that the UE2 can access the network element 1 based on the SIB1.

In this embodiment, the network element 1 may broadcast only the SIB1 after receiving the WUS sent by the UE2, or may simultaneously broadcast the SSB and the SIB1.

In a first implementation, the network element 1 broadcasts only the SIB1 after receiving the WUS.

In this case, the UE2 may achieve downlink synchronization with the network element 1 based on the SSB broadcast by the network element 1 before receiving the WUS, parse MIB information from the SSB, and store the MIB information locally. In this way, the network element 1 may broadcast only the SIB1 after receiving the WUS. Correspondingly, when obtaining the downlink synchronization, the UE2 decodes, based on the stored MIB information, the SIB1 broadcast by the network element 1, to obtain the access configuration information required for accessing the network element 1, so that the UE2 can further access the network element 1 based on the access configuration information.

For example, the broadcasting the SSB, receiving the WUS, and broadcasting the SIB1 by the network element 1 may occur within a same signal broadcast period. For example, when the signal broadcast period is relatively long, the network element 1 may first broadcast the SSB, receive the WUS sent by the UE2 within the signal broadcast period, and further complete broadcasting of the SIB1 within the signal broadcast period. In this way, the UE2 can access the network element 1 based on the SSB and the SIB1 successively broadcast by the network element 1 within the same signal broadcast period.

In a second implementation, the network element 1 may broadcast the SSB and the SIB1 together after receiving the WUS.

For example, the network element 1 may broadcast only the SSB before receiving the WUS. For ease of distinction, the SSB is referred to as a first SSB below. Then, the UE2 may achieve downlink synchronization with the network element 1 based on the received first SSB, and send the WUS to the network element 1. The network element 1 may successively broadcast a second SSB and the SIB1 within a next signal broadcast period after receiving the WUS. In this way, the UE2 can access the network element 1 based on the second SSB and the SIB1 broadcast by the network element 1 within the same signal broadcast period. In this way, when the UE2 has a requirement for accessing the network element 1, the UE2 can obtain the SSB and the SIB1 within the same signal broadcast period, thereby improving efficiency of the UE2 accessing the network element 1.

In this embodiment, before the network element 1 obtains the WUS, the UE2 can achieve downlink synchronization by obtaining the SSB sent by the network element 1. In this case, the network element 1 does not need to send the SIB1, so that the network element 1 can save energy consumption generated by sending the SIB1, to achieve energy saving, as shown in FIG. 6 (that is, an energy-saving effect corresponding to an energy-saving manner 2).

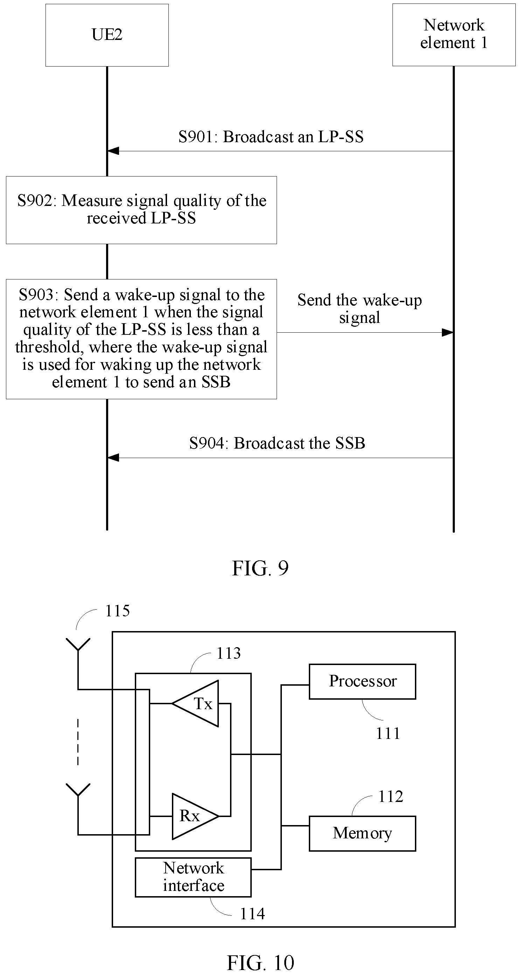

Refer to FIG. 9. A schematic flowchart of yet another communication method is shown. The communication method shown in FIG. 9 may be applied to the communication system shown in FIG. 2C, or may be applied to other possible communication systems. For ease of understanding and description, a description is provided below by using an example in which the communication method is applied to the communication system shown in FIG. 2C. As shown in FIG. 9, a process of the communication method includes the following steps.

S901: A network element 1 broadcasts an LP-SS.

The LP-SS refers to a low-power synchronization signal (low power synchronization signal).

In this embodiment, the network element 1 may send the LP-SS with relatively low power consumption, and specifically broadcast the LP-SS. In this way, the UE2 in an idle state (idle) or an inactive state (inactive) within signal coverage of the network element 1 can perform synchronization with the network element 1 by using the DRS, and may specifically perform downlink synchronization.

During actual application, the network element 1 may periodically broadcast the LP-SS. The period may be, for example, 20 milliseconds (ms), or may be 40 ms. This is not limited. For ease of description, a period in which the network element 1 sends a signal is referred to as a signal broadcast period below.

In a possible implementation, within each signal broadcast period, the network element 1 may send the LP-SS separately on a plurality of beams. For example, the network element 1 may separately send the LP-SS on 8 or 64 beams. In addition, on each of the beams, the network element 1 may send one LP-SS, or may send a plurality of LP-SSs. The network element 1 may use different time domains when sending the LP-SS on different beams.

Alternatively, within each signal broadcast period, the network element 1 may send the LP-SS without distinguishing between the beams. In this case, the network element 1 may send one LP-SS, or the network element may send a plurality of LP-SSs, so that the UE2 can increase a success rate of decoding the LP-SS based on the plurality of LP-SSs.

S902: A UE2 measures signal quality of the received LP-SS.

It may be understood that because a distance between the UE2 and the network element 1 is not fixed, for the LP-SS broadcast by the network element 1, this leads to relatively high signal quality of the LP-SS received by the UE2 when the distance between the UE2 and the network element 1 is relatively small. However, when the distance between the UE2 and the network element 1 is relatively large, signal attenuation occurs when the LP-SS is transmitted from the network element 1 to the UE2. This leads to relatively low signal quality of the LP-SS received by the UE2.

Therefore, during reception of the LP-SS, the UE2 may measure the signal quality of the received LP-SS, to determine a level of the signal quality of the received LP-SS. In this embodiment, the level of the signal quality may be determined through comparison with a threshold. To be specific, when the measured signal quality is greater than or equal to the threshold, it indicates that the signal quality of the LP-SS received by the UE2 is relatively high; and when the measured signal quality is lower than the threshold, it indicates that the signal quality of the LP-SS received by the UE2 is relatively low.

S903: The UE2 sends a wake-up signal to the network element 1 when the signal quality of the received LP-SS is lower than a threshold, where the wake-up signal is used for waking up the network element 1 to send an SSB.

In this embodiment, when the UE2 determines, by measuring the signal quality of the LP-SS, that the signal quality is lower than the threshold, it indicates that a problem of excessively low signal quality may occur after the signal sent by the network element 1 is transmitted to the UE2. Because the network element 1 sends the LP-SS in a low-power-consumption state, the UE2 may request the network element 1 to send the SSB, so that the UE2 can detect whether a problem of relatively low signal quality still exists when a signal broadcast by the network element 1 with relatively high power consumption is transmitted to the UE2.

During specific implementation, when the signal quality of the received LP-SS is lower than the threshold, the UE2 may first achieve downlink synchronization with the network element 1 based on the received LP-SS, and may further determine a first time-frequency resource for sending a signal to the network element, so that the UE2 can send the wake-up signal (wake up signal, WUS) to the network element 1 based on the determined first time-frequency resource. The WUS is used for waking up the network element 1 to send the SSB.

In this embodiment, the following several example implementations for determining the first time-frequency resource are provided.

In a first possible implementation, the UE2 may determine, based on one or more received LP-SSs, the first time-frequency resource used when sending the WUS, and may specifically determine an identifier of the first time-frequency resource.

During specific implementation, one or more time-frequency resources that can be used by the UE for sending the WUS may be defined in a standard (such as release 19). For example, a table may be defined in the standard, and the table may record indexes (indexes) of a plurality of types of time-frequency resources. Each of the indexes is used for identifying a time-frequency resource. Correspondingly, the network element 1 may incorporate the identifier of the first time-frequency resource into the LP-SS when broadcasting the LP-SS.

In Example 1, the network element 1 may send one or more LP-SSs within a signal broadcast period based on the identifier of the first time-frequency resource when broadcasting the LP-SS. Correspondingly, the UE2 may determine the identifier of the first time-frequency resource based on a time distribution of the received LP-SS within a single signal broadcast period.

In Example 2, the network element 1 may add the identifier of the first time-frequency resource to the LP-SS when generating the LP-SS, and may specifically carry the identifier of the first time-frequency resource by using one or more reserved REs in the LP-SS. In this way, after receiving the LP-SS, the UE2 may parse the identifier of the first time-frequency resource from the at least one RE included in the LP-SS.

In Example 3, the network element 1 may use the identifier of the first time-frequency resource as a generation parameter of a coding sequence of the LP-SS when generating the LP-SS. Correspondingly, after receiving the LP-SS, the UE2 obtains the identifier of the first time-frequency resource by decoding the LP-SS. For example, assuming that the identifier of the first time-frequency resource is indicated by using values of four bits, the UE2 may traverse all value combinations of the four bits, and determine a coding sequence of the LP-SS corresponding to each value combination of the four bits. Then, the UE2 may match the coding sequence of the LP-SS corresponding to each value combination with the coding sequence of the received LP-SS. When the coding sequence of the LP-SS corresponding to one of the value combinations matches the coding sequence of the LP-SS received by the UE2, the UE2 may determine the value combination of the four bits as the identifier indicating the first time-frequency resource.

During actual application, the UE2 may also determine the identifier of the first time-frequency resource in another manner based on the received LP-SS. This is not limited.

The first time-frequency resource indicated by the network 1 may be, for example, a resource on a random access channel (random access channel, RACH). Specifically, the first time-frequency resource includes one or more random access channel occasions (random access channel occasion, RO), so that the UE2 may send the WUS signal to the network element 1 by using the RACH based on the RO. During actual application, the first time-frequency resource may be either a RACH resource or another applicable resource. This is not limited.

Further, when the first time-frequency resource is the RACH resource, the identifier indicating the first time-frequency resource may further indicate that the UE2 sends a candidate preamble of the WUS by using the RACH resource.

In a second possible implementation, the UE2 may also independently determine the first time-frequency resource used for sending the WUS, without intervention from the network element 1.

In Example 1, one or more time-frequency resources that can be used by the UE for sending the WUS may be defined in a standard (such as release 19). In this way, the UE2 may select one type of time-frequency resource from a plurality of predefined types of time-frequency resources to send the WUS.

In Example 2, a plurality of types of time-frequency resources that can be used by the UE for sending the WUS may be defined in a standard (such as release 19). When determining the first time-frequency resource, the UE2 may first determine at least one type of time-frequency resource associated with the UE2. Then, the UE2 may determine, from the at least one type of time-frequency resource associated with the UE2, the first time-frequency resource for sending the WUS. For example, the first time-frequency resource may be determined by random selection. The first time-frequency resource determined by the UE2 may be, for example, a resource on a random access channel (random access channel, RACH), or may be another applicable resource. This is not limited.

In a third possible implementation, the network element 1 may also send group-common (group-common) downlink control information (downlink control information, DCI). The group-common DCI may define time-frequency resources that can be used by a plurality of UEs to send the WUS to the network element 1. The group-common DCI may include a plurality of bits. Consecutive partial bits in the plurality of bits indicate a time-frequency resource that can be used by a UE. Different partial bits in the plurality of bits indicate time-frequency resources that can be used by different UEs. In this way, after receiving the group-common DCI, the UE2 may parse, from the group-common DCI, the identifier of the first time-frequency resource that can be used by the UE2, to determine the first time-frequency resource used for sending the WUS.

During actual application, the UE2 may also determine the first time-frequency resource in another manner. This is not limited.

When the UE2 sends the WUS through 2-step-RACH (2-step-RACH) or 4-step-RACH (4-step-RACH), the first time-frequency resource may be one or more ROs defined in the standard. Correspondingly, the network element 1 may detect the RACH within a preset resource window, to determine whether a signal exists on the RACH. After determining, by detecting the RACH within the resource window, that a signal is received, the network element 1 may identify, based on a preamble on the RO, that the signal is a WUS.

Alternatively, the WUS sent by the UE2 on the first time-frequency resource may be a specific coding sequence, for example, may be a low peak-to-average power ratio code (peak-to-average power ratio, PAPR), or may be a pseudo random code (pseudo random code). Correspondingly, after decoding the received signal, the network element 1 may determine whether the sequence obtained through decoding is a specific coding sequence. If the sequence is the specific coding sequence, the network element 1 may determine that the signal is a WUS. If the sequence is not the specific coding sequence, the network element 1 may determine that the signal is not a WUS.

Alternatively, the WUS sent by the UE2 on the first time-frequency resource may be any codeword. In this case, the network element 1 may detect a magnitude of energy of a signal sent through the first time-frequency resource. When the energy of the signal is greater than a threshold, the network element 1 may determine that the signal is a WUS. Otherwise, the network element 1 may determine that the signal is not a WUS. In this way, the network element 1 may not need to decode the received signal, so as to simplify implementation logic for the network element 1 to determine reception of the WUS, and save energy consumption generated by decoding the signal.

During actual application, a process in which the UE2 sends the WUS to the network element 1 may also be implemented in another manner. For example, the foregoing plurality of implementations may be combined. This is not limited.

S904: The network element 1 broadcasts the SSB.

When the network element 1 determines that the UE sends the WUS, it indicates that the UE currently needs the network element 1 to send the SSB. Therefore, the network element 1 enters, from a state of broadcasting the LP-SS with low power consumption, a state of broadcasting the SSB with relatively high power consumption. In this way, the UE2 can obtain the SSB requested by the UE2.

In a first implementation example, the network element 1 may resume periodic broadcasting of the SSB after receiving the WUS.

In a second implementation example, after receiving the WUS, the network element 1 may broadcast the SSB within a preset quantity of signal broadcast periods. For example, the network element 1 may continuously broadcast the SSB and the SIB1 within two signal broadcast periods. After completing the broadcasting of the SSB within the preset quantity of signal broadcast periods, the network element 1 may reenter a state of broadcasting the LP-SS with low power consumption, until the network element 1 receives the WUS again and then restarts broadcasting the SSB.

In addition, the network element 1 may not perform beam differentiation during broadcasting of the SSB, that is, within each signal broadcast period, the network element 1 may send only one SSB. Alternatively, the network element 1 may also broadcast the SSB by performing beam differentiation, so that the network element 1 can separately send the SSB on a plurality of beams after receiving the WUS. In other words, within each signal broadcast period, the network element 1 may send a plurality of SSBs.

It should be noted that in this embodiment, a description is provided by using an example in which the UE2 wakes up the network element 1 to send the SSB based on the LP-SS broadcast by the network element 1. During actual application, the signal coverage of the network element 1 may further include another UE, and after receiving the LP-SS, the another UE may also achieve downlink synchronization based on the LP-SS, and send a WUS to the network element 1 by using a second time-frequency resource.

In this embodiment, before the network element 1 obtains the WUS, the UE2 can achieve downlink synchronization by obtaining the LP-SS sent by the network element 1. In this way, the network element 1 does not need to broadcast the SSB and the SIB1 with relatively high power consumption, so that the network element 1 can save energy consumption generated by sending the SSB and the SIB1, to achieve energy saving.

In this embodiment, after receiving the SSB, the UE2 not only may continue to maintain downlink synchronization based on the SSB, but also can measure signal quality of the SSB, to determine whether the signal quality of the SSB is relatively high after the SSB broadcast by the network element 1 with relatively high power consumption is transmitted to the UE2. If the signal quality of the SSB transmitted to the UE2 is relatively high (that is, greater than the threshold), it indicates that the UE2 can maintain normal communication with the network element 1 after subsequently accessing the network element 1. If the signal quality of the SSB transmitted to the UE2 is relatively low, it indicates that after the UE2 subsequently accesses the network element 1, due to excessively low signal quality of a signal sent by the network element 1 to the UE2, the UE2 fails to successfully receive data sent by the network element 1, affecting communication between the network element 1 and the UE2.

Further, after receiving the WUS, the network element 1 not only may broadcast the SIB1, but also may broadcast the SSB. In this way, when the signal quality of the SSB transmitted to the UE2 is relatively high, the UE2 can access the network element 1 based on the received SSB and SIB1, so as to subsequently establish a connection with the network element 1 and perform communication. Certainly, in another implementation, the network element 1 may alternatively broadcast only the SSB. This is not limited.

During actual application, when the UE2 measures the signal quality of the received SSB, and finds that the signal quality of the SSB is relatively low, that is, the signal quality may be lower than a threshold, it indicates that communication quality between the UE2 and the network element 1 is relatively poor. In this case, the UE2 may switch a network element to be subsequently accessed. For example, the UE2 may measure an LP-SS or an SSB sent by another network element, and when signal quality of the received LP-SS or SSB sent by the another network element is greater than a threshold, the UE2 may access the another network element subsequently, and establish a connection with the another network element and perform communication. In this way, it can be ensured that after the UE2 accesses the network element, the communication with the network element can be prevented from being affected by poor signal quality.

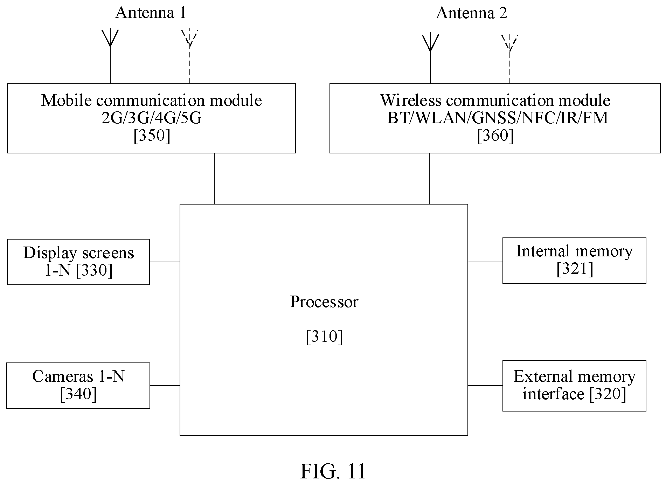

A hardware implementation of a network element and a UE is further described below with reference to FIG. 10 and FIG. 11.

Refer to FIG. 10. A schematic diagram of a hardware structure of a network element is shown. The network element shown in FIG. 10 includes at least one processor 111, at least one memory 112, at least one transceiver 113, at least one network interface 114, and one or more antennas 115. The processor 111, the memory 112, the transceiver 113, and the network interface 114 are connected, for example, through a bus. In embodiments of this application, the connection may include various types of interfaces, transmission lines, buses, or the like. This is not limited in embodiments. The antenna 115 is connected to the transceiver 113. The network interface 114 is configured to enable the network element to be connected to another communication device through a communication link. For example, the network interface 114 may include a network interface between the network element and a network element in a core network, for example, an S1 interface. The network interface may include a network interface between the network element and another network element, for example, an X2 or Xn interface.

The processor 111 shown in FIG. 10 may specifically complete an action processed by the network element in the foregoing method. The memory 112 may complete a storage action in the foregoing method. The transceiver 113 and the antenna 115 may perform receiving and sending actions on an air interface in the foregoing method. The network interface 114 may complete an action of interaction with the network element or another network element in the foregoing method.

The processor in embodiments of this application, for example, the processor 111, may include but is not limited to at least one of the following: a central processing unit (central processing unit, CPU), a microprocessor, a digital signal processor (DSP), a microcontroller unit (microcontroller unit, MCU), or various types of computing devices running software such as an artificial intelligence processor. Each type of computing device may include one or more cores for executing software instructions to perform an operation or processing. The processor may be a separate semiconductor chip, or may be integrated with another circuit into one semiconductor chip. For example, the processor may form an SoC (system on chip) together with another circuit (for example, a codec circuit, a hardware acceleration circuit, or various bus and interface circuits), or may also be integrated into an ASIC as a built-in processor of the ASIC, where the ASIC integrated with the processor may be packaged separately, or may also be packaged together with another circuit. In addition to including a core for executing software instructions to perform an operation or processing, the processor may further include a necessary hardware accelerator, such as a field programmable gate array (field programmable gate array, FPGA), a PLD (programmable logic device), or a logic circuit for implementing a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or may also be an electrically erasable programmable read-only memory (Electrically erasable programmabler-only memory, EEPROM). In some scenarios, the memory may also be a compact disc read-only memory (compact disc read-only memory, CD-ROM), or another optical disc storage, optical disk storage (including a compact optical disc, a laser disc, an optical disc, a digital versatile disc, a blu-ray disc, and the like), a magnetic disk storage medium or another magnetic storage device, or any other medium that may be configured to carry or store desired program code in a form of instructions or data structures and that may be accessed by a computer. This application is not limited thereto.

The memory 112 may exist independently and is connected to the processor 111. Optionally, the memory 112 and the processor 111 may be integrated together, for example, integrated into one chip. The memory 112 can store program code for executing the technical solutions in embodiments of this application, and execution is controlled by the processor 111. Various types of executed computer program code may also be regarded as a driver of the processor 111. For example, the processor 111 is configured to execute the computer program code stored in the memory 112, thereby implementing the technical solutions in embodiments of this application.

The transceiver 113 may be configured to support receiving or sending of radio frequency signals between the network element and another device. The transceiver 113 may be connected to the antenna 115. The transceiver 113 includes a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate frequency signal, and provide the digital baseband signal or the digital intermediate frequency signal to the processor 111, so that the processor 111 further processes the digital baseband signal or the digital intermediate frequency signal, for example, performs demodulation processing and decoding processing. In addition, the transmitter Tx in the transceiver 113 is further configured to receive, from the processor 111, a modulated digital baseband signal or a modulated digital intermediate frequency signal, convert the modulated digital baseband signal or the modulated digital intermediate frequency signal into a radio frequency signal, and send the radio frequency signal through the one or more antennas 115. Specifically, the receiver Rx may selectively perform one-stage or multi-stage down-conversion processing and analog-to-digital conversion processing on the radio frequency signal to obtain a digital baseband signal or a digital intermediate frequency signal, and an order of the down-conversion processing and the analog-to-digital conversion processing is adjustable. The transmitter Tx may selectively perform one-stage or multi-stage up-conversion processing and digital-to-analog conversion processing on the modulated digital baseband signal or the modulated digital intermediate frequency signal to obtain a radio frequency signal, and an order of the up-conversion processing and the digital-to-analog conversion processing is adjustable. The digital baseband signal and the digital intermediate frequency signal may be collectively referred to as digital signals.

FIG. 11 is a composition example of a UE according to an embodiment of this application. The UE may be, for example, a mobile phone or an intelligent wearable device (for example, an intelligent watch). A mobile phone is used as an example below. The UE may include a processor 310, an external memory interface 320, an internal memory 321, a display screen 330, a camera 340, an antenna 1, an antenna 2, a mobile communication module 350, a wireless communication module 360, and the like.

It may be understood that the structure illustrated in this embodiment does not constitute a specific limitation on the UE. In some other embodiments, the UE may include more or fewer components than those shown in the figure, or some components may be combined, or some components may be split, or components are arranged in different manners. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

It may be understood that an interface connection relationship between the modules illustrated in this embodiment is merely an example for description, and does not constitute a limitation on the structure of the UE. In some other embodiments of this application, the UE may use an interface connection manner different from that in the foregoing embodiment or use a combination of a plurality of interface connection manners.

The external memory interface 320 may be configured to connect to an external memory card such as a micro SD card, to extend a storage capability of the UE. The external storage card communicates with the processor 310 by using the external memory interface 320, to implement a data storage function. For example, files such as music and videos are stored in the external storage card.

The internal memory 321 may be configured to store computer-executable program code. The executable program code includes instructions. The processor 310 runs the instructions stored in the internal memory 321, to perform various function applications and data processing of the UE. The internal memory 321 may include a program storage area and a data storage area. The program storage area may store an operating system, an application program required for at least one function (for example, a sound playing function or an image playing function), and the like. The data storage area may store data (for example, video stream data) and the like created during use of the UE. In addition, the internal memory 321 may include a high-speed random access memory, and may further include a non-volatile memory, for example, at least one magnetic disk storage device, a flash memory device, or a universal flash storage (universal flash storage, UFS). The processor 310 runs the instructions stored in the internal memory 321, and/or the instructions stored in the memory arranged in the processor, to perform various functions and data processing of the UE.

A wireless communication function of the UE may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the UE may be configured to cover one or more communication bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a solution to wireless communication such as 2G/3G/4G/5G applied to the UE. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit the electromagnetic wave to the modem processor for demodulation. The mobile communication module 350 may further amplify a signal modulated by the modem processor, and convert the signal into an electromagnetic wave by using the antenna 1 for radiation. In some embodiments, at least some of functional modules of the mobile communication module 350 may be arranged in the processor 310. In some embodiments, at least some of the functional modules of the mobile communication module 350 may be arranged in a same component as at least some of modules of the processor 310.

In some embodiments, the UE initiates or receives a call request through the mobile communication module 350 and the antenna 1.

In addition, an operating system runs on the foregoing components, for example, an iOS operating system, an Android operating system, or a Windows operating system. An application program may be installed and run in the operating system. It may be clearly understood by a person skilled in the art that, for convenient and brief description, the explanation and the beneficial effects of related contents in any one of the UEs provided above can refer to the corresponding method embodiment provided above. Details are not described herein.

In addition, an embodiment of this application further provides a computer-readable storage medium. The computer-readable storage medium stores instructions that, when run on one or more computing devices, cause the one or more computing devices to perform the communication method according to the foregoing embodiments.

Further, an embodiment of this application further provides a computer program product. When the computer program product is executed by one or more computing devices, the one or more computing devices perform any one of the methods in the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that may be performed by a computer program may be easily implemented by using corresponding hardware. Further, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application, in essence or a part contributing to the conventional technology, may be implemented in a form of a software product. The computer software product is stored in a readable storage medium, such as a floppy disk, a USB flash drive, a removable hard disk, a ROM, a RAM, a magnetic disk, or an optical disc of a computer, and includes instructions for instructing a computer device (which may be a personal computer, a training device, a network device, or the like) to perform the methods according to embodiments of this application.

All or some of the foregoing embodiments may be implemented by using software, hardware, firmware, or any combination thereof. When the foregoing embodiments are implemented by using software, all or some of the foregoing embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, another computer, another training device, or another data center in a wired manner (for example, through a coaxial cable, an optical fiber, or a digital subscriber line (DSL)) or a wireless manner (for example, an infrared manner, a radio manner, or a microwave manner). The computer-readable storage medium may be any usable medium that may be stored by a computer, or may be a data storage device, such as a training device or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), or the like.

The system architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of a new service scenario, the technical solutions provided in embodiments of this application are also applicable to a similar technical problem.

## Claims

1. A communication method, wherein the method is applied to a user equipment UE, and the method comprises:
obtaining a discovery reference signal DRS, wherein the DRS is used for synchronizing with a network element;
sending a wake-up signal, wherein the wake-up signal is used for waking up the network element to send at least one of a synchronization signal/physical broadcast channel block SSB and a system information block SIB1;
obtaining at least one of the SSB and the SIB1; and
accessing the network element based on at least one of the SSB and the SIB1.

2. The method according to claim 1, wherein the wake-up signal is sent based on a first time-frequency resource, and the method further comprises:
determining an identifier of the first time-frequency resource based on the DRS.

3. The method according to claim 2, wherein the DRS further comprises at least one resource element RE, and the determining an identifier of the first time-frequency resource based on the DRS comprises:
parsing the at least one RE in the DRS, to obtain the identifier of the first time-frequency resource.

4. The method according to claim 2, wherein the determining an identifier of the first time-frequency resource based on the DRS comprises:
parsing a coding sequence of the DRS, to obtain the identifier of the first time-frequency resource, wherein the identifier of the first time-frequency resource serves as a generation parameter of the coding sequence of the DRS.

5. The method according to claim 2, wherein the obtaining a discovery reference signal DRS comprises:
obtaining at least one DRS within a signal broadcast period; and
the determining an identifier of the first time-frequency resource based on the DRS comprises:
determining the identifier of the first time-frequency resource based on a time distribution of the at least one DRS within the signal broadcast period.

6. The method according to claim 1, wherein the wake-up signal is sent based on a first time-frequency resource, and the method further comprises:
randomly selecting one type of time-frequency resource from a plurality of predefined types of time-frequency resources as the first time-frequency resource.

7. The method according to claim 1, wherein the wake-up signal is sent based on a first time-frequency resource, and the method further comprises:
determining at least one type of time-frequency resource associated with the UE; and
determining the first time-frequency resource from the at least one type of time-frequency resource.

8. The method according to claim 1, wherein the wake-up signal is sent based on a first time-frequency resource, and the method further comprises:
obtaining group-common downlink control information DCI; and
parsing an identifier of the first time-frequency resource from the group-common DCI.

9. The method according to any one of claims 1 to 8, wherein the DRS comprises a primary synchronization signal PSS and a secondary synchronization signal SSS.

10. The method according to any one of claims 1 to 9, wherein the obtaining a discovery reference signal DRS comprises:
obtaining a plurality of DRSs, wherein each of the plurality of DRSs corresponds to one beam, and different DRSs correspond to different beams; and
the sending a wake-up signal comprises:
determining a first beam, wherein one of the plurality of DRSs located on the first beam has highest signal quality; and
sending the wake-up signal on the first beam.

11. The method according to any one of claims 1 to 10, wherein a coding sequence of the wake-up signal is a preset coding sequence; or
the sending a wake-up signal comprises:
sending the wake-up signal on a random access channel RACH.

12. The method according to any one of claims 1 to 11, wherein the DRS occupies two orthogonal frequency division multiplexing OFDM symbols in time domain, the PSS occupies the first of the OFDM symbols, and the SSS occupies the second of the OFDM symbols; or
the DRS occupies four OFDM symbols in time domain, the PSS occupies the first of the OFDM symbols, and the SSS occupies the third of the OFDM symbols.

13. The method according to any one of claims 1 to 12, wherein the DRS comprises a low-power synchronization signal LP-SS, the wake-up signal is used for waking up the network element to send the SSB, and the sending a wake-up signal comprises:
sending the wake-up signal when signal quality of the LP-SS is lower than a threshold.

14. A communication method, wherein the method is applied to a network element, and the method comprises:
sending a discovery reference signal DRS, wherein the DRS is used for providing synchronization for a user equipment UE;
obtaining a wake-up signal, wherein the wake-up signal is used for waking up the network element to send at least one of a synchronization signal/physical broadcast channel block SSB and a system information block SIB1; and
sending at least one of the SSB and the SIB1 based on the wake-up signal, wherein the SSB and the SIB1 are used by the UE to access the network element.

15. The method according to claim 14, wherein the wake-up signal is transmitted based on a first time-frequency resource, the DRS further comprises at least one resource element RE, and the at least one RE indicates the first time-frequency resource.

16. The method according to claim 14, wherein the wake-up signal is transmitted based on a first time-frequency resource, and a generation parameter of a coding sequence of the DRS comprises an identifier of the first time-frequency resource.

17. The method according to claim 14, wherein the wake-up signal is transmitted based on a first time-frequency resource, and the sending a discovery reference signal DRS comprises:
sending at least one DRS within a signal broadcast period, wherein a time distribution of the at least one DRS within the signal broadcast period indicates the first time-frequency resource.

18. The method according to claim 14, wherein the wake-up signal is transmitted based on a first time-frequency resource, and the method further comprises:
sending group-common downlink control information DCI, wherein the group-common DCI carries an identifier of the first time-frequency resource.

19. The method according to any one of claims 14 to 18, wherein the DRS comprises a primary synchronization signal PSS and a secondary synchronization signal SSS.

20. The method according to any one of claims 14 to 19, wherein the sending a discovery reference signal DRS comprises:
sending a plurality of DRSs, wherein each of the plurality of DRSs corresponds to one beam, and different DRSs correspond to different beams; and
the obtaining a wake-up signal comprises:
obtaining the wake-up signal on the first beam, wherein one of the plurality of DRSs transmitted to the UE that is located on the first beam has a highest signal quality.

21. The method according to any one of claims 14 to 20, wherein energy of the wake-up signal is greater than a threshold; or
a coding sequence of the wake-up signal is a preset coding sequence; or
the obtaining a wake-up signal comprises:
detecting, within a resource window, the wake-up signal located on a random access channel RACH.

22. The method according to any one of claims 14 to 21, wherein the DRS occupies 2 orthogonal frequency division multiplexing OFDM symbols in time domain, the PSS occupies the first of the OFDMs, and the SSS occupies the second of the OFDM symbols; or
the DRS occupies four OFDM symbols in time domain, the PSS occupies the first of the OFDM symbols, and the SSS occupies the third of the OFDM symbols.

23. The method according to any one of claims 14 to 22, wherein the DRS comprises a low-power synchronization signal LP-SS, the wake-up signal is used for waking up the network element to send the SSB.

24. A communication method, wherein the method is applied to a user equipment UE, and the method comprises:
obtaining a synchronization signal/physical broadcast channel block SSB;
sending a wake-up signal, wherein the wake-up signal is used for waking up a network element to send a system information block SIB1;
obtaining the SIB1; and
accessing the network element based on the SIB1.

25. The method according to claim 24, wherein a coding sequence of the wake-up signal is a preset coding sequence; or
the sending a wake-up signal comprises:
sending the wake-up signal on a random access channel RACH.

26. The method according to claim 24 or 25, wherein the wake-up signal is sent based on a first time-frequency resource, and the method further comprises:
parsing at least one resource element RE in the SSB, to obtain an identifier of the first time-frequency resource.

27. The method according to claim 24 or 25, wherein the wake-up signal is sent based on a first time-frequency resource, and the method further comprises:
obtaining group-common downlink control information DCI; and
parsing an identifier of the first time-frequency resource from the group-common DCI.

28. The method according to claim 24 or 25, wherein the wake-up signal is sent based on a first time-frequency resource, and the method further comprises:
randomly selecting one type of time-frequency resource from a plurality of predefined types of time-frequency resources as the first time-frequency resource.

29. The method according to claim 24 or 25, wherein the wake-up signal is sent based on a first time-frequency resource, and the method further comprises:
determining at least one type of time-frequency resource associated with the UE; and
determining the first time-frequency resource from the at least one type of time-frequency resource.

30. A communication method, wherein the method is applied to a network element, and the method comprises:
sending a synchronization signal/physical broadcast channel block SSB;
obtaining a wake-up signal, wherein the wake-up signal is used for waking up the network element to send a system information block SIB1; and
sending the SIB1 based on the wake-up signal, wherein the SIB1 is used by a UE to access the network element.

31. The method according to claim 30, wherein energy of the wake-up signal is greater than a threshold; or
a coding sequence of the wake-up signal is a preset coding sequence; or
the obtaining a wake-up signal comprises:
detecting, within a resource window, the wake-up signal located on a random access channel RACH.

32. The method according to claim 30 or 31, wherein the wake-up signal is transmitted based on a first time-frequency resource, and the method further comprises:
sending group-common downlink control information DCI, wherein the group-common DCI carries an identifier of the first time-frequency resource.

33. The method according to claim 30 or 31, wherein the wake-up signal is sent based on a first time-frequency resource, and at least one resource element RE in the SSB indicates an identifier of the first time-frequency resource.

34. A user equipment UE, comprising:
a transceiver, configured to perform a receiving operation and a sending operation in the method according to any one of claims 1 to 13 and 24 to 29; and
a processor, configured to perform other operations than the receiving operation and the sending operation in the method according to any one of claims 1 to 13 and 24 to 29.

35. A network element, comprising:
a transceiver, configured to perform a receiving operation and a sending operation in the method according to any one of claims 14 to 23 and 30 to 33; and
a processor, configured to perform other operations than the receiving operation and the sending operation in the method according to any one of claims 14 to 23 and 30 to 33.

36. A communication system, comprising a user equipment UE and a network element, wherein the UE is configured to perform the method according to any one of claims 1 to 13 and 24 to 29, and the network element is configured to perform the method according to any one of claims 14 to 23 and 30 to 33.

37. A computer storage medium, configured to store a computer program, wherein the computer program, when executed, is used for implementing the communication method according to any one of claims 1 to 33.
